# EUROPEAN PATENT APPLICATION

(11) **EP 4 622 342 A1**
(43) Date of publication of application: **24.09.2025**
(21) Application number: 23909301.6
(22) Date of filing: 05.09.2023
(51) Int. Cl.: H04W 36/00

(54) **METHOD AND APPARATUS FOR CALL CONNECTION**

(30) Priority: 30.12.2022 CN 202211737088
(71) Applicant: Honor Device Co., Ltd., Shenzhen, Guangdong 518040 (CN)
(72) Inventor: YAO, Dongqiang, Shenzhen, Guangdong 518040 (CN); LI, Haibo, Shenzhen, Guangdong 518040 (CN); ZHANG, Mingchen, Shenzhen, Guangdong 518040 (CN)
(74) Representative: Gill Jennings & Every LLP
(86) International application number: PCT/CN2023/116892
(87) International publication number: WO 2024/139363

(57) **Abstract**

A method and an apparatus for a call connection are provided, which may be applied to a scenario in which a called terminal falls back from an NR standard to an LTE standard through EPSFB in a process of being called. The method is applied to a called terminal, and the method includes: receiving, by the called terminal, an update message; receiving a handover command; handing over from an NR standard to an LTE standard according to the handover command; sending a first response message after receiving the update message and before completing a tracking area update TAU, where the first response message carries a first parameter, and the first parameter indicates that no voice bearer is set up between the called terminal and a called core network device; and sending a ringing message. **In** this application, the called terminal does not need to wait for the TAU to be completed before sending the first response message. By sending the first response message in advance, a message disorder problem in which the ringing message arrives earlier than the first response message is avoided, so that a calling core network device can smoothly forward a voice packet transferred between a calling side and a called side, thereby reducing a probability of voicelessness of a call.

## Description

This application claims priority to Chinese Patent Application No. 202211737088.6, filed with the China National Intellectual Property Administration on December 30, 2022 and entitled "METHOD AND APPARATUS FOR CALL CONNECTION", which is incorporated herein by reference in its entirety.

### TECHNICAL FIELD

This application relates to the field of voice call, and specifically, to a method and an apparatus for a call connection.

### BACKGROUND

A session initiation protocol (session initiation protocol, SIP) is an application-layer control protocol proposed by the Internet Engineering Task Force (the internet engineering task force, IETF) for multimedia communication over an IP network. During setup of a call connection, a calling terminal and a called terminal may communicate by using a message or signaling in the SIP protocol.

During setup of a call connection between the calling terminal and the called terminal, the called terminal may fall back from a new radio (new radio, NR) standard to a long term evolution (long term evolution, LTE) standard in a process of being called. When the terminal falls back from the NR standard to the LTE standard, the called terminal sends a 200 OK message to the calling terminal through a network. In a short time in which the called terminal sends the 200 OK message to the calling terminal through the network, the called terminal further sends a 180 Ringing message to the calling terminal through the network. In this case, a problem of voicelessness after a call often occurs, affecting user call experience.

### SUMMARY

In view of this, this application provides a method and an apparatus for a call connection, a computer-readable storage medium, and a computer program product, to reduce a probability of voicelessness of a call.

According to a first aspect, a method for a call connection is provided, where the method is applied to a called terminal, and the method includes:
receiving a session invite from a calling terminal, where the session invite is used for requesting to set up a voice call with the called terminal;
sending a request response message to the calling terminal, where the request response message is a response to the session invite and is used for indicating that the called terminal has received the session invite;
receiving an update message from a called core network device;
receiving a handover command, where the handover command is used for notifying the called terminal to hand over from a first communication standard to a second communication standard;
handing over from the first communication standard to the second communication standard according to the handover command;
sending a first response message after receiving the update message and before completing a tracking area update TAU, where the first response message is a response to the update message, the first response message is used for indicating that the called terminal has received the update message, the first response message carries a first parameter, and the first parameter indicates that no voice bearer is set up between the called terminal and the called core network device; and
sending a ringing message after the called terminal sends the first response message, where the ringing message is used for notifying the calling terminal that the called terminal has started ringing.

The foregoing technical solution is performed by the called terminal or a chip in the called terminal. Based on the foregoing solution, compared with that the called terminal sends the first response message after waiting for the TAU to be completed, the called terminal does not need to wait for the TAU to be completed before sending the first response message, so that an interval between the time at which the called terminal sends the first response message and the time at which the called terminal sends the ringing message becomes longer. That is to say, the interval between the time at which the called terminal sends the first response message and the time at which the called terminal sends the ringing message in this embodiment of this application is greater than an interval between the time at which the called terminal sends the first response message and the time at which the called terminal sends the ringing message in the related art. In this way, although no voice bearer is created between the called terminal and the called core network device when the first response message is sent, because a sending time of the first response message is advanced, the first response message arrives at a calling core network device earlier than the ringing message, thereby avoiding a message disorder problem generated when the ringing message arrives earlier than the first response message. Therefore, the calling core network device can smoothly forward a voice packet on a called side, thereby reducing a probability of voicelessness of a call.

It should be noted that, in this specification, the "calling core network device" may be a calling home core network device, and the "called core network device" may be a called home core network device.

In some possible implementations, the sending a first response message after receiving the update message and before completing a tracking area update TAU includes: sending, by the called terminal, the first response message after receiving the handover command and handing over from the first communication standard to the second communication standard and before completing the tracking area update TAU.

In some possible implementations, after the called terminal sends the first response message and before the ringing message is sent, the method further includes:
receiving a voice bearer setup message from the called core network device, where the voice bearer setup message is used for requesting to set up a voice bearer in the second communication standard with the called terminal;
setting up a voice bearer with the called terminal according to the voice bearer setup message; and
sending a voice bearer setup complete message to the called core network device, where the voice bearer setup complete message is used for indicating that a voice bearer is set up between the called terminal and the called core network device.

Therefore, before sending the ringing message, the called terminal may first set up a bearer with the called core network device, to prepare for a subsequent call connection.

In some possible implementations, after the first response message is sent, the method further includes:
sending a first request message, where the first request message is used for requesting to update a tracking area;
receiving a TAU accept message from the called core network device, where the TAU accept message is used for responding to the first request message; and
sending a TAU complete message to the called core network device, where the TAU complete message indicates that a tracking area update process is completed.

Therefore, after sending the first response message, the called terminal may continue to complete the tracking area update process to fall back to the second communication standard (for example, an LTE standard).

Optionally, the first response message is a 200 OK message.

Optionally, a value of the first parameter is local none.

According to a second aspect, a method for a call connection is provided, where the method is applied to a called core network device, and the method includes:
sending, by the called core network device, a session invite to a called terminal, where the session invite is used for requesting to set up a voice call with the called terminal;
receiving, by the called core network device, a request response message sent by the called terminal, where the request response is a response to the session invite and is used for indicating that the called terminal has received the session invite message;
forwarding, by the called core network device, the request response message to a calling core network device;
sending, by the called core network device, an update message to the called terminal;
sending a handover command to the called terminal, where the handover command is used for notifying the called terminal to hand over from a first communication standard to a second communication standard;
receiving a first response message from the called terminal after the handover command is sent to the called terminal and before the called terminal completes initiation of a tracking area update TAU, where the first response message is used for indicating that the called terminal has received the update message, the first response message carries a first parameter, and the first parameter indicates that no voice bearer is set up between the called terminal and the called core network device;
sending the first response message to the calling core network device;
receiving a ringing message from the called terminal, where the ringing message is used for notifying the calling terminal that the called terminal has started ringing; and
sending the ringing message to the calling core network device.

The foregoing technical solution is performed by the called core network device or a chip in the called core network device. Based on the foregoing solution, the called core network device may forward, to the calling core network device, the first response message sent by the called terminal before the TAU, so that the first response message arrives at the calling core network device earlier than the ringing message, thereby avoiding a message disorder problem generated when the ringing message arrives earlier than the first response message. Therefore, the calling core network device can smoothly forward a voice packet on a called side, thereby reducing a probability of voicelessness of a call.

In some possible implementations, before the ringing message from the called terminal is received, the method further includes:
sending a voice bearer setup message to the called terminal; and
receiving a voice bearer setup complete message from the called terminal, where the voice bearer setup complete message is used for indicating that a voice bearer is set up between the called terminal and the called core network device.

In some possible implementations, after the first response message is received, the method further includes:
receiving a first request message from the called terminal, where the first request message is used for requesting to update a tracking area;
sending an accept message to the called terminal, where the accept message is used for responding to the first request message; and
receiving a tracking area update complete message from the called terminal, where the tracking area update complete message indicates that a tracking area update process is completed.

According to a third aspect, a method for a call connection is provided, where the method is applied to a calling core network device, and the method includes:
sending, by the calling core network device, a session invite to a called core network device, where the session invite is used for requesting to set up a voice call with a called terminal;
receiving, by the calling core network device, a request response message from the called core network device, where the request response message is a response to the session invite and is used for indicating that the called terminal has received the session invite;
receiving an update message sent by a calling terminal, and sending the update message to the called core network device;
receiving a first response message from the called core network device, where the first response message is used for indicating that the called terminal has received the update message, the first response message carries a first parameter, and the first parameter indicates that no voice bearer is set up between the called terminal and the called core network device;
disabling a media forwarding port according to the first parameter;
receiving a ringing message from the called core network device, where the ringing message is used for notifying the calling terminal that the called terminal has started ringing;
enabling the media forwarding port according to the ringing message; and
sending the ringing message to the calling terminal.

The foregoing technical solution is performed by the calling core network device or a chip in the calling core network device. Based on the foregoing solution, the first response message arrives at the calling core network device earlier than the ringing message, thereby avoiding a message disorder problem generated when the ringing message arrives earlier than the first response message. Therefore, the calling core network device can smoothly forward a voice packet on a called side, thereby reducing a probability of voicelessness of a call.

According to a fourth aspect, a method for a call connection is provided, where the method is applied to a calling terminal, and the method includes:
sending, by the calling terminal, a session invite to a calling core network device, where the session invite is used for requesting to set up a voice call with a called terminal;
receiving, by the calling terminal, a request response message forwarded by the calling core network device, where the request response is a response to the session invite and is used for indicating that the called terminal has received the session invite message;
sending, by the calling terminal, an update message to the calling core network device;
receiving, by the calling terminal, a first response message from the calling core network device, where the first response message is used for indicating that the called terminal has received the update message, the first response message carries a first parameter, and the first parameter indicates that no voice bearer is set up between the called terminal and the called core network device; and
receiving, by the calling terminal, a ringing message from the calling core network device, where the ringing message is used for notifying the calling terminal that the called terminal has started ringing.

The foregoing technical solution is performed by the calling terminal or a chip in the calling terminal. Based on the foregoing solution, the first response message arrives at the calling core network device earlier than the ringing message, thereby avoiding a message disorder problem generated when the ringing message arrives earlier than the first response message. Therefore, the calling core network device can smoothly forward a voice packet on a called side, so that the calling terminal can receive a voice packet from the called terminal, thereby reducing a probability of voicelessness of a call.

According to a fifth aspect, a call method is provided, where the method is applied to a called terminal, and the method includes:
receiving a session invite from a calling terminal, where the session invite is used for requesting to set up a voice call with the called terminal;
sending a request response message to the calling terminal, where the request response message is a response to the session invite and is used for indicating that the called terminal has received the session invite;
receiving an update message from a called core network device;
starting a first timer after receiving the update message;
receiving, by the called terminal, a handover command in the first timer, where the handover command is used for notifying the called terminal to hand over from a first communication standard to a second communication standard;
handing over, by the called terminal, from the first communication standard to the second communication standard according to the handover command;
sending, by the called terminal, a second response message to the core network device when the called terminal receives, in the first timer, a voice bearer setup message from the called core network device after handing over from the first communication standard to the second communication standard and a voice bearer is set up between the called terminal and the called core network device after the voice bearer setup message is received, where the second response message is a response to the update message, the second response message is used for indicating that the called terminal has received the update message, the second response message carries a second parameter, the second parameter indicates that a voice bearer is set up between the called terminal and the core network, and the voice bearer setup message is used for requesting to set up a voice bearer in the second communication standard with the called terminal; and
sending a ringing message after the called terminal sends the second response message, where the ringing message is used for notifying the calling terminal that the called terminal has started ringing.

The foregoing technical solution is performed by the called terminal or a chip in the called terminal. Based on the foregoing solution, after receiving the update message from the called core network device, the called terminal starts the first timer, and then detects, in the first timer, whether the voice bearer setup message is received from the called core network device. If the voice bearer setup message is received from the called core network device in the first timer, the called terminal sends the second response message (for example, a 200 OK message) to the called core network device, where the second response message carries a second parameter, and the second parameter indicates that a voice bearer is set up between the called terminal and the called core network device. Compared with a case in which the second response message is sent without waiting for the voice bearer to be set up, by setting the timer to wait for the voice bearer to be set up in this embodiment of this application, if the voice bearer is set up during running of the timer, the calling core network device can smoothly forward a voice packet, thereby reducing a probability of voicelessness of a call.

Optionally, a value of the second parameter is local sendrecv.

Optionally, a duration of the first timer is greater than a first time threshold and less than a second time threshold, and the second time threshold is related to a duration of a timer related to setting up a voice bearer on a called core network side.

For example, the duration of the first timer is less than a duration of a timer on a called core network side.

In some possible implementations, the method further includes:
receiving the voice bearer setup message from the called core network device in the first timer; and
sending a voice bearer setup complete message to the called core network device in the first timer.

In some possible implementations, the method further includes:
sending, by the called terminal, a third response message to the called core network device in response to that the called terminal has not received the voice bearer setup message from the called core network device in the first timer, where the third response message is a response to the update message, the third response message is used for indicating that the called terminal has received the update message, the third response message carries a first parameter, and the first parameter indicates that no voice bearer is set up between the called terminal and the called core network device; and
sending a ringing message to the called core network device after the third response message is sent, where the ringing message is used for notifying the calling terminal that the called terminal has started ringing.

In some possible implementations, after the third response message is sent to the called core network device and before the ringing message is sent to the called core network device, the method further includes:
receiving the voice bearer setup message from the called core network device; and
sending a voice bearer setup complete message to the called core network device.

For example, if the called terminal has not received, in the first timer, the voice bearer setup message delivered by the called core network device, the called terminal sends the 200 OK message to the called core network device after the first timer expires. In addition, before sending a 180 Ringing message to the called core network device, the called terminal needs to wait for creation of a voice bearer before sending the 180 Ringing message to the called core network device. In this way, a time interval between the 200 OK message and the 180 Ringing message can be increased, thereby alleviating problems of disorder and voicelessness of a call caused by a short time interval, and improving user experience.

Optionally, a value of the first parameter is local none.

Optionally, a value of the second parameter is local sendrecv.

According to a sixth aspect, a call method is provided, where the method is applied to a called core network device, and the method includes:
sending, by the called core network device, a session invite to a called terminal, where the session invite is used for requesting to set up a voice call with the called terminal;
receiving, by the called core network device, a request response message sent by the called terminal, where the request response is a response to the session invite and is used for indicating that the called terminal has received the session invite message;
forwarding, by the called core network device, the request response message to a calling core network device;
sending an update message to the called terminal;
receiving a second response message from the called terminal, where the second response message carries a second parameter, the second parameter indicates that a voice bearer is set up between the called terminal and the core network, and the second response message is sent by the called terminal when the called core network device sends a voice bearer setup message to the called terminal in the first timer;
sending the second response message to the calling core network device;
receiving a ringing message from the called terminal, where the ringing message is used for notifying the calling terminal that the called terminal has started ringing; and
sending the ringing message to the calling core network device.

The foregoing technical solution is performed by the called core network device or a chip in the called core network device. Based on the foregoing solution, if the called core network device sends the voice bearer setup message to the called terminal in the first timer, after receiving the second response message (for example, a 200 OK message), the called core network device may forward the second response message to the calling core network device, where the second response message carries a second parameter, and the second parameter indicates that a voice bearer is set up between the called terminal and the called core network device, so that the calling core network device can enable a media forwarding port according to the second parameter, to smoothly forward a voice packet, thereby reducing a probability of voicelessness of a call.

For related descriptions of the first timer, reference may be made to the descriptions in the fifth aspect. Details are not described herein again.

In some possible implementations, the method further includes:
sending a voice bearer setup message to the called terminal in the first timer; and
receiving a voice bearer setup complete message from the called terminal in the first timer.

In a possible implementation, if the called core network device has not sent the voice bearer setup message in the first timer, the method further includes: receiving a third response message from the called terminal, where the third response message carries a first parameter, and the first parameter indicates that no voice bearer is set up between the called terminal and the called core network device; and
sending the third response message to the calling core network device; and
the receiving a ringing message includes:
   receiving the ringing message from the called terminal after setup of a voice bearer between the called terminal and the called core network device is completed.

In a possible implementation, if the called core network device has not sent the voice bearer setup message in the first timer, the method further includes: sending a voice bearer setup message to the called terminal before the ringing message is received from the called terminal; and receiving a voice bearer setup complete message from the called terminal.

According to a seventh aspect, a call method is provided, where the method is applied to a calling core network device, and the method includes:
sending, by the calling core network device, a session invite to a called core network device, where the session invite is used for requesting to set up a voice call with a called terminal;
receiving, by the calling core network device, a request response message from the called core network device, where the request response is a response to the session invite and is used for indicating that the called terminal has received the session invite message;
receiving, by the calling core network device, an update message from a calling terminal, and sending the update message to the called core network device;
receiving, by the calling core network device, a second response message from the called core network device, and sending the second response message to the calling terminal, where the second response message carries a second parameter, the second parameter indicates that a voice bearer is set up between the called terminal and the core network, and the second response message is sent when the called terminal receives a voice bearer setup message from the called core network device in a first timer;
enabling, by the calling core network device, a media forwarding port according to the second parameter; and
receiving, by the calling core network device, a ringing message from the called core network device, and sending the ringing message to the calling terminal, where the ringing message is used for notifying the calling terminal that the called terminal has started ringing.

The foregoing technical solution is performed by the calling core network device or a chip in the calling core network device. Based on the foregoing solution, after receiving the second response message, the calling terminal enables the media forwarding port according to the second parameter, so that a voice packet on a called side can be smoothly forwarded, thereby reducing a probability of voicelessness of a call.

In a possible implementation, if the called core network device has not sent the voice bearer setup message in the first timer, the method further includes: receiving a third response message from the called core network device, where the third response message carries a first parameter, and the first parameter indicates that no voice bearer is set up between the called terminal and the called core network device; and
disabling a media forwarding port according to the first parameter;
the method further includes: enabling the media forwarding port according to the ringing message after the ringing message is received.

Herein, even if the calling core network device disables the media forwarding port according to the third response message, after subsequently receiving the ringing message, the calling core network device further enables the media forwarding port based on the ringing message, so that the voice packet on the called side can be smoothly forwarded, thereby reducing a probability of voicelessness of a call.

According to an eighth aspect, a call method is provided, where the method is applied to a calling terminal, and the method includes:
sending, by the calling terminal, a session invite to a calling core network device, where the session invite is used for requesting to set up a voice call with a called terminal;
receiving, by the calling terminal, a request response message forwarded by the calling core network device, where the request response is a response to the session invite and is used for indicating that the called terminal has received the session invite message;
sending, by the calling terminal, an update message to the calling core network device;
receiving, by the calling terminal, a second response message from the calling core network device, where the second response message carries a second parameter, the second parameter indicates that a voice bearer is set up between the called terminal and the core network, and the second response message is sent when the called terminal receives a voice bearer setup message from the called core network device in a first timer;
receiving, by the calling terminal, a ringing message from the calling core network device, where the ringing message is used for notifying the calling terminal that the called terminal has started ringing.

The foregoing technical solution is performed by the calling terminal or a chip in the calling terminal. Based on the foregoing solution, after the second response message arrives at the calling core network device, the calling core network device enables the media forwarding port according to the second parameter. Therefore, the calling core network device can smoothly forward a voice packet on a called side, so that the calling terminal can receive a voice packet from the called terminal, thereby reducing a probability of voicelessness of a call.

Alternatively, in a possible implementation, if the called core network device has not sent the voice bearer setup message in the first timer, the method further includes: receiving a third response message from the calling core network device, where the third response message carries a first parameter, and the first parameter indicates that no voice bearer is set up between the called terminal and the called core network device.

According to a ninth aspect, an electronic device is provided, including a unit configured to perform any method according to the first aspect, the fourth aspect, the fifth aspect, and the eighth aspect. The electronic device may be a terminal, or may be a chip in a terminal. The electronic device includes an input unit, a display unit, and a processing unit.

When the electronic device is a terminal, the processing unit may be a processor, the input unit may be a communication interface, and the display unit may be a graphics processing module and a screen. The terminal may further include a memory. The memory is configured to store computer program code. When the processor executes the computer program code stored in the memory, the terminal is enabled to perform any method in the first aspect, or the terminal is enabled to perform any method in the fourth aspect, or the terminal is enabled to perform any method in the fifth aspect, or the terminal is enabled to perform any method in the first aspect, or the terminal is enabled to perform any method in the eighth aspect.

When the electronic device is a chip in a terminal, the processing unit may be a logic processing unit inside the chip, the input unit may be an input interface, a pin, a circuit, or the like, and the display unit may be a graphics processing unit inside the chip. The chip may further include a memory. The memory may be a memory (for example, a register or a buffer) in the chip, or may be a memory (for example, a read-only memory or a random access memory) located outside the chip. The memory is configured to store computer program code. When the processor executes the computer program code stored in the memory, the chip is enabled to perform any method in the first aspect, or the terminal is enabled to perform any method in the fourth aspect, or the terminal is enabled to perform any method in the fifth aspect, or the terminal is enabled to perform any method in the first aspect, or the terminal is enabled to perform any method in the eighth aspect.

According to a tenth aspect, an apparatus for a call connection is provided. The apparatus includes a unit configured to perform any method according to the second aspect, the third aspect, the sixth aspect, and the seventh aspect. The electronic device may be a core network device, or may be a chip in a core network device.

According to an eleventh aspect, a computer-readable storage medium is provided. The computer-readable storage medium stores computer program code, and the computer program code, when run by an apparatus for a call connection, causes the transpose to perform any method according to the first aspect to the eighth aspect.

According to a twelfth aspect, a computer program product is provided. The computer program product includes: computer program code. The computer program code, when run by an apparatus for a call connection, causes the transpose to perform any method according to the first aspect to the eighth aspect.

According to a thirteenth aspect, an embodiment of this application provides a chip system. The chip system includes one or more processors, configured to invoke, from a memory, instructions stored in the memory and run the instructions, to cause the method according to any one of the foregoing aspects or the possible implementations of the aspects to be performed. The chip system may include a chip, or may include a chip and another discrete device.

The chip system may include an input circuit or interface configured to send information or data and an output circuit or interface configured to receive information or data.

According to a fourteenth aspect, a communication system is provided, including one or more of the foregoing called terminal, calling terminal, called core network device, and calling core network device. Optionally, the communication system may further include another device (for example, a calling access network device or a called access network device) that communicates with the foregoing device.

### BRIEF DESCRIPTION OF DRAWINGS

FIG. 1 is an exemplary diagram of a scenario of a communication system to which an embodiment of this application is applied;
FIG. 2 is an exemplary diagram of a partial procedure in which messages are not disordered when a calling terminal sets up a call connection to a called terminal;
FIG. 3 is an exemplary diagram of a partial procedure in which messages are disordered when a calling terminal sets up a call connection to a called terminal;
FIG. 4 is a schematic flowchart of a method for a call connection according to an embodiment of this application;
FIG. 5 is a schematic procedure interaction diagram of a method for a call connection according to an embodiment of this application;
FIG. 6 is an exemplary diagram of a call connection according to an embodiment of this application;
FIG. 7 is a schematic flowchart of a method for a call connection according to another embodiment of this application;
FIG. 8 is a schematic procedure interaction diagram of a method for a call connection according to another embodiment of this application;
FIG. 9 is an exemplary diagram of a call connection according to another embodiment of this application;
FIG. 10 is an exemplary block diagram of an apparatus for a call connection according to an embodiment of this application; and
FIG. 11 is a schematic structural diagram of an electronic device to which an embodiment of this application is applied.

### DESCRIPTION OF EMBODIMENTS

The following describes technical solutions in embodiments of this application with reference to the accompanying drawings.

In the embodiments of this application, "plurality" may mean two or more unless otherwise described.

The technical solutions of the embodiments of this application may be applied to various communications systems, such as a Long Term Evolution (long term evolution, LTE) system, a Universal Mobile Telecommunications System (universal mobile telecommunication system, UMTS), a Worldwide Interoperability for Microwave Access (worldwide interoperability for microwave access, WiMAX) communications system, a 5th generation (5th generation, 5G) system or new radio (new radio, NR), a future mobile communication system, vehicle-to-X (vehicle-to-X, V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), Internet of Vehicles, machine type communication (machine type communication, MTC), Internet of Things (internet of things, IoT), long term evolution-machine (long term evolution-machine, LTE-M), machine-to-machine (machine-to-machine, M2M), and the like.

The embodiments of this application are applied to a scenario in which a terminal falls back from a first communication standard to a second communication standard in a process of being called. The first communication standard is different from the second communication standard. The first communication standard and the second communication standard are not specifically limited in the embodiments of this application.

For example, the first communication standard may be an NR standard, and the second communication standard may be an LTE standard.

An interaction procedure in the embodiments of this application may be applied to a session initiation protocol (session initiation protocol, SIP). The SIP is used for controlling initiation, modification, and termination of a signaling protocol of an interactive multimedia session.

Some messages in the SIP protocol are briefly described below.

A session invite message (Invite) is used for initiating a session request. The session invite message may be initiated by a calling terminal.

An update message (Update) is used for initiating an update request. The update message is usually used for media update. The update message may be initiated by the calling terminal.

A PRACK message is used for returning an acknowledgement for a provisional reliability response to confirm that a 1XX provisional response has been received. The PRACK message is generally used for acknowledging a 183 message during session setup, and perform SDP provision for the second time to negotiate media resources.

An ACK message is used for acknowledging that a final response to an Invite request has been received. After receiving a 200 (OK) final response with which a called party replies in a session, a calling party sends an ACK message to the called party to confirm that the calling party has received the final response, to complete a three-way handshake including Invite, 200, and ACK. The ACK message is used only in conjunction with the Invite message.

A BYE request is used for end the current session. When the BYE request is received, a session in which a current Dialog (Dialog) is located is terminated. The BYE request can be sent only in a dialog that is set up (set up through an Invite request), a calling party of a session can send a BYE request in an Early Dialog (Early Dialog) and a confirmed dialog (Confirmed Dialog) to terminate the session, and a called party can send a BYE request only in the confirmed dialog (Confirmed Dialog) to terminate the session.

Activate Dedicated EPS Bearer Context Request: The message is sent by a network to a UE, and is used for requesting to activate a dedicated evolved packet switched system (evolved packet switched system, EPS) bearer context. The dedicated bearer and the activated default EPS bearer context have a same PDN address and APN.

Activate Dedicated EPS Bearer Context Accept: The message is sent by the UE to the network and is used for acknowledging activation of a default bearer context.

Tracking Area Update Request: It is a real tracking area registration update of the UE in the network.

Tracking Area Update Accept: The network sends the message to the UE, provides data related to EPS mobility management, and responds to the tracking area update request message.

Tracking Area Update Complete: If a globally unique temporary UE identity (globally unique temporary UE identity, GUTI) has been changed or a new temporary mobile subscriber identity (temporary mobile subscriber identity, TMSI) is allocated, the UE sends this message to the network to respond to the tracking area Update accept message.

RRC: It is radio resource control (radio resource control, RRC). A radio resource control protocol RRC layer controls allocation of a radio resource and sends related signaling.

RRCConnectionReconfiguration: It is an RRC reconfiguration message, used for allocation of a radio resource.

MeasurementReport: It is used for reporting a radio measurement result.

RRC Release: It is used for releasing a radio resource.

MobilityFromNRCommand: It is a command used by the network to instruct the terminal to hand over from an NR network to an LTE network.

The SIP protocol response message is used for responding to the request message and indicating a success or failure state of the call. Different types of response messages are distinguished by status codes. A status code usually includes a three-digit integer. The first digit of the status code is used for defining a response type, and the other two digits are used for further describing the response in more detail.

The SIP protocol response message is classified as follows:
1xx: It is an information response (call progress response), indicating that a request message has been received and is being processed.
   For example, a 100 Trying message is used for attempting a call. In another example, a 180 Ringing message is a ringing message.
2xx: It is a success response, indicating that the request has been successfully accepted or processed. For example, a 200 OK (Invite) message is used for indicating that the Invite request has been successfully accepted or processed.
3xx: It is a redirection response, indicating that a further action needs to be taken to complete the request.
4xx: It is a client error, indicating that the request message includes a syntax error or a SIP server cannot complete processing of the request message.
5xx: It is a server error, indicating that a SIP server fails and cannot complete processing of a correct message.
6xx: It is a global failure, indicating that the request cannot be implemented on any SIP server.

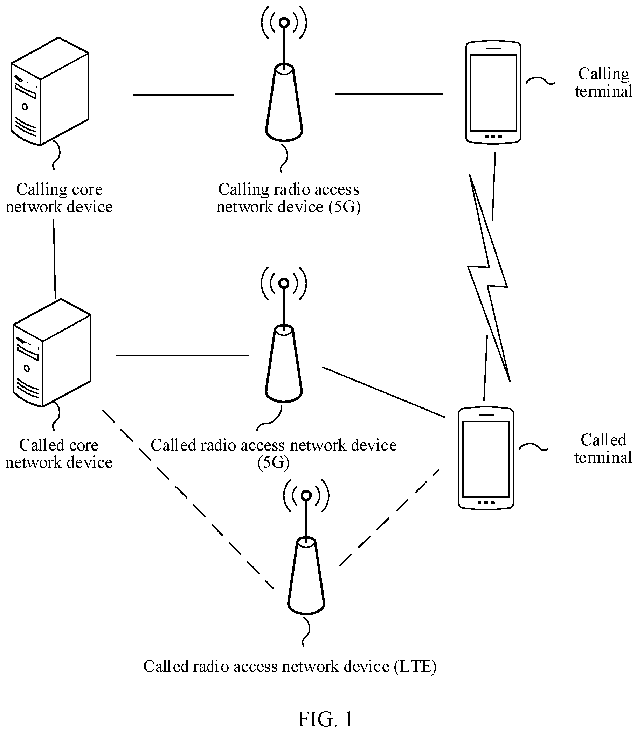

It should be understood that the foregoing messages in the SIP protocol are merely examples for description, and the embodiments of this application are not limited thereto. FIG. 1 is an exemplary diagram of a scenario of a communication system to which an embodiment of this application is applied. As shown in FIG. 1, the communication system includes a calling terminal, a calling radio access network device, a calling core network device, a called terminal, a called radio access network device (NR), and a called radio access network device (LTE), and a called core network device. The calling terminal may set up a call connection to the called terminal.

In the 3rd generation partnership project (3rd generation partnership project, 3GPP), a 5G mobile communication network can continue to use a voice architecture of a 4G mobile communication network and still provide a voice service based on an IP multimedia subsystem (IP multimedia subsystem, IMS). A radio access technology of the 4G mobile communication network is long term evolution (long term evolution, LTE), and a voice call service carried by LTE is referred to as voice on LTE (VoLTE). A radio access technology of the 5G mobile communication network may be referred to as NR, and a voice call service carried by NR is referred to as voice on NR (VoNR). VoNR is a final voice service solution of 5G. When 5G does not have a VoNR condition, 5G NR may not be able to provide a voice service, and then a voice service needs to be implemented based on VoLTE. To be specific, when initiating a call, a terminal residing in NR needs to fall back to 4G in an evolved packet switched system (evolved packet switched system, EPS) fallback (fallback, FB) manner, to use VoLTE to carry a voice service. EPS FB means that when 5G does not have a VoNR condition, a voice service falls back from 5G to 4G (that is, handing over from the NR standard to the LTE standard), and continuity of the voice service is ensured according to VoLTE. Therefore, VoLTE and VoNR exist as different access manners of an IMS voice service of 5G.

For example, for the called terminal, in a communication process, there may be a scenario of handing over from NR to LTE, that is, falling back from the NR to the LTE standard in the EPS FB manner. As shown in FIG. 1, when the called terminal resides in an NR access network, if 5G does not have a VoNR condition, a voice service of the called terminal is handed over from the NR standard to the LTE standard, that is, the called terminal may hand over to an LTE access network and reside, to ensure service continuity.

As uniformly described herein, in this application, the "calling core network device" may be a calling home core network device, and the "called core network device" may be a called home core network device.

Regardless of being on a calling side or a called side, the terminal is connected to the access network device in a wireless manner, and the radio access network device is connected to the core network device in a wireless or wired manner. The core network device and the radio access network device may be independent and different physical devices, or a function of the core network device and a logical function of the radio access network device may be integrated into a same physical device, or some functions of the core network device and some functions of the radio access network device may be integrated into one physical device. The terminal device may be in a fixed position or may be movable.

It should be understood that FIG. 1 is merely a schematic diagram of an architecture of the communication system. The communications system may further include another network device, for example, may further include a wireless relay device and a wireless backhaul device, which are not shown in FIG. 1. A quantity of core network devices, a quantity of radio access network devices, and a quantity of terminals included in the mobile communications system are not limited in this embodiment of this application.

The terminal may also be referred to as a terminal device, user equipment (user equipment, UE), a mobile station (mobile station, MS), a mobile terminal (mobile terminal, MT), an access terminal, a user unit, a user station, a mobile site, a mobile station, a remote station, a remote terminal, a mobile device, a user terminal, a terminal, a wireless communications device, a user agent, or a user apparatus.

The terminal may be a device providing voice/data connectivity to a user, for example, a handheld device or an in-vehicle device having a wireless connection function. At present, examples of some terminals are as follows: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal carrying a cloud game, a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, an in-vehicle device, a wearable device, a terminal device in a future 5G network, a terminal device in a future evolved public land mobile network (public land mobile network, PLMN), and the like. This is not limited in the embodiments of this application.

As an example instead of a limitation, in this embodiment of this application, the terminal may alternatively be a wearable device. A wearable device may also be referred to as a wearable intelligent device, and is a general term of wearable devices, such as glasses, gloves, watches, clothes, and shoes, that are developed by applying wearable technologies in intelligent designs of daily wear. A wearable device is a portable device that can be directly worn on a body or integrated into clothes or an accessory of a user. A wearable device is not merely a hardware device, but is used to implement a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application and need to work with other devices such as smartphones, such as various smart bracelets or smart jewelry for monitoring physical signs.

In addition, in the embodiments of this application, the terminal may also be a terminal device in an Internet of things (Internet of things, IoT) system. IoT is an important part in future development of information technologies, and is mainly technically characterized in that things are connected to networks through communication technologies, so as to achieve intelligent networks of human-machine interconnection and interconnection between things. The embodiments of this application impose no limitation on a specific technology and a specific device form used by the terminal.

The radio access network (radio access network, RAN) device is an access device that is accessed by the terminal in a wireless manner and that is in the mobile communications system, and may be a base station NodeB, an evolved NodeB (evolved NodeB, eNB), a next generation NodeB (next generation NodeB, gNB) in a 5G mobile communications system, a transmission point, a base station in a future mobile communications system, an access node in a Wi-Fi system, or one or more antenna panel of a base station in the 5G system, or may be a network node that constitutes a gNB or a transmission point, for example, a baseband unit (baseband unit, BBU) or a distributed unit (distributed unit, DU). The embodiments of this application impose no limitation on a specific technology and a specific device form used by the radio access network device. In some deployments, the gNB may include a central unit (central unit, CU) and a DU, and each of the CU and the DU implements some functions of the gNB. For example, the CU is responsible for processing a non-real-time protocol and service, and implementing a function at radio resource control (radio resource control, RRC) and packet data convergence protocol (packet data convergence protocol, PDCP) layers. The DU is responsible for processing a physical layer protocol and real-time service, and implementing a function at radio link control (radio link control, RLC), media access control (media access control, MAC), and physical (physical, PHY) layers. The gNB may further include an active antenna unit (active antenna unit, AAU). The AAU implements some physical layer processing functions, and functions related to radio frequency processing and active antenna. Because the information at the RRC layer eventually becomes the information at the PHY layer, or is transformed from the information at the PHY layer, in this architecture, higher layer signaling, for example, RRC layer signaling, may also be considered as being sent by the DU, or sent by the DU + the AAU. It may be understood that the network device may be a device including one or more of a CU node, a DU node, and an AAU node. In addition, the CU may be used as a network device in an access network, or may be used as a network device in a core network (core network, CN). This is not limited in this application.

The radio access network device and the terminal may be deployed on land, including an indoor or an outdoor scenario and a handheld or an in-vehicle scenario, or may be deployed on water, or may be deployed on an aircraft, a balloon, and a satellite in the air. Application scenarios of the radio access network device and the terminal are not limited in the embodiments of this application.

Communication may be performed between the radio access network device and a terminal and between terminals through a licensed spectrum (licensed spectrum), an unlicensed spectrum (unlicensed spectrum), or both a licensed spectrum and an unlicensed spectrum. Communication may be performed between the radio access network device and a terminal and between terminals by using a spectrum below 6 gigahertz (gigahertz, GHz), or a spectrum above 6G, or both a spectrum below 6G and a spectrum above 6G. A spectrum resource used between the radio access network device and the terminal is not limited in this embodiment of this application.

In the embodiments of this application, the terminal or the network device includes a hardware layer, an operating system layer running in the hardware layer, and an application layer running on the operating system layer. The hardware layer includes hardware such as a central processing unit (central processing unit, CPU), a memory management unit (memory management unit, MMU), and a memory (which is also referred to as a main memory). The operating system may be any one or more computer operating systems for implementing service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in the embodiments of this application is not particularly limited in the embodiments of this application, provided that communication can be performed according to the method provided in the embodiments of this application by running a program of code recording the method provided in the embodiments of this application. For example, the execution body of the method provided in the embodiments of this application may be a terminal device or a network device, or a functional module that is in a terminal device or a network device and that can invoke a program and execute the program.

In addition, aspects or features of this application may be implemented as a method, an apparatus or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD), a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are used to store information. The term "machine-readable medium" may include, but is not limited to, a radio channel, and various other media capable of storing, containing, and/or carrying instructions and/or data.

In a process in which the calling terminal sets up a call connection to the called terminal, the called terminal sends a success response message (for example, 200 OK) to the calling side core network device through the called core network device, and sends a ringing message (for example, 180 Ringing) to the calling side core network device through the called core network device after a period of time.

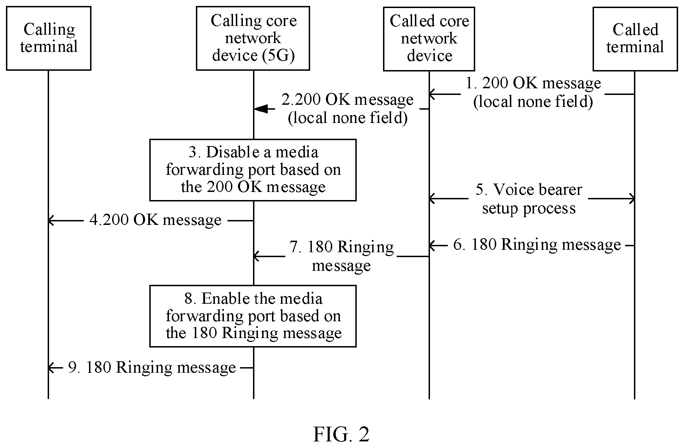

Descriptions are provided in the following with reference to an example in FIG. 2. FIG. 2 is an exemplary diagram of a partial procedure in a process in which a calling terminal sets up a call connection to a called terminal. As shown in FIG. 2,
Step 1. A called terminal sends a 200 OK message to a called core network device.

The 200 OK message carries local none. The local none indicates that no voice bearer is set up between the called terminal and the called core network device.

Step 2. The called core network device sends the 200 OK message to a calling core network device.

Step 3. After receiving the 200 OK message, the calling core network device disables a media forwarding port based on the local none in the 200 OK message.

Step 4. The calling core network device sends the 200 OK message to a calling terminal.

Step 5. Set up a voice bearer between the called terminal and the called core network device.

Step 6. The called terminal sends a 180 Ringing message to the called core network device.

Step 7. The called core network device forwards the 180 Ringing message to the calling core network device.

Step 8. The calling core network device enables the media forwarding port according to the 180 Ringing message.

Step 9. The calling core network device sends the 180 Ringing message to the calling terminal.

In the scenario shown in FIG. 2, the called terminal first sends the 200 OK message and then sends the 180 Ringing message to the calling terminal through the called core network device and the calling core network device. Normally, the 200 OK message arrives at the calling core network device earlier, and the 180 Ringing message arrives at the calling core network device later. In this case, the calling core network device may forward a voice packet between the calling terminal and the called terminal through the media forwarding port that is enabled according to the 180 Ringing message, to ensure that a call between the calling terminal and the called terminal is voiced.

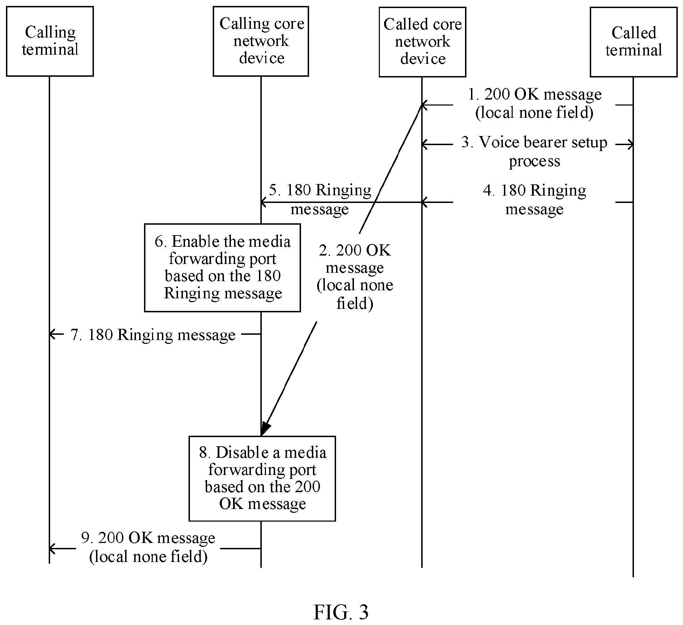

However, in the scenario in FIG. 2, if the interval between the time at which the called terminal sends the 200 OK (carrying the local none) message and the time at which the called terminal sends the 180 Ringing message is particularly short, for example, the interval is less than a value (usually 200 ms), a case that the 180 Ringing message arrives at the calling core network device earlier and the 200 OK (carrying the local none) message arrives at the calling core network device later may occur during message transmission, resulting in a problem of message disorder. Descriptions are provided in the following with reference to an example in FIG. 3.

FIG. 3 is an exemplary diagram of a partial procedure in which messages are disordered. As shown in FIG. 3,
Step 1. A called terminal sends a 200 OK message to a called core network device. The 200 OK message carries local none. For the explanation of the local none, refer to the description in FIG. 2.

The 200 OK message is a success response message.

Step 2. The called core network device sends the 200 OK (carrying the local none) message to a calling core network device.

Step 3. Set up a voice bearer between the called terminal and the called core network device.

Step 4. The called terminal sends a 180 Ringing message to the called core network device.

The 180 Ringing message is a ringing message. The 180 Ringing message indicates that the called terminal has started ringing.

Step 5. The called core network device forwards the 180 Ringing message to the calling core network device.

Step 6. After receiving the 180 Ringing message, the calling core network device enables a media forwarding port to forward a media packet.

Step 7. The calling core network device sends the 180 Ringing message to the calling terminal.

Step 8. The calling core network device disables the media forwarding port based on the received 200 OK (carrying the local none) message.

When the interval between the time at which the called terminal sends the 200 OK (carrying the local none) message and the time at which the called terminal sends the 180 Ringing message is small, the 200 OK (carrying the local none) message arrives at the calling core network device later than the 180 Ringing message, that is, the messages are disordered.

The 200 OK (carrying the local none) message and the 180 Ringing message arrive at the calling side core network device disorderly after being transmitted through a network, that is, the calling side core network device first receives the 180 Ringing and then receives the 200 OK (carrying the local none) message. After receiving the 180 Ringing message, the calling side core network device sets a call state to a ringing state according to the 180 Ringing message and enables the media forwarding port. After receiving the 200 OK message, the calling side core network device disables the media forwarding port if the 200 OK message carries the local none. After the media forwarding port is disabled, even if a call between the calling terminal and the called terminal is connected, the calling side core network device cannot forward voice media (or a voice packet) transmitted between the calling terminal and the called terminal, resulting in voicelessness after the current call is connected, that is, the two-way call is voiced, thereby affecting user call experience.

It should be understood that the procedure in FIG. 2 or FIG. 3 is described by using a partial procedure in the session initiation protocol SIP as an example. In fact, the process in which the calling terminal sets up the call connection to the called terminal may include more procedures.

It should be further understood that the messages or signaling involved in FIG. 2 or FIG. 3 may be messages or signaling in the SIP, and for related specific explanations, reference may be made to the descriptions in the SIP. The foregoing message descriptions are merely simple descriptions.

In view of this, the embodiments of this application provide a method for a call connection. After receiving a handover command (for example, the handover command is used for instructing a terminal to hand over from NR to LTE), a called terminal sends a 200 OK (carrying local none) message (corresponding to a first response message below) to a called core network device, and the 200 OK (carrying the local none) message is sent without waiting for TAU to be completed, so that an interval between the time at which the called terminal sends the 200 OK (carrying the local none) message and the time at which the called terminal sends a 180 Ringing message becomes longer, that is, the interval between the time at which the terminal sends the 200 OK (carrying the local none) message and the time at which the terminal sends the 180 Ringing message in the process of being called in this embodiment of this application is greater than the interval between the time at which the called terminal sends the 200 OK (carrying the local none) message and the time at which the called terminal sends the 180 Ringing message in the current technology, which can avoid a message disorder problem generated when the 180 Ringing message arrives at the calling core network device earlier than the 200 OK (carrying the local none) message, so that the calling core network device can smoothly forward a voice packet on a called side, thereby reducing a probability of voicelessness of a call.

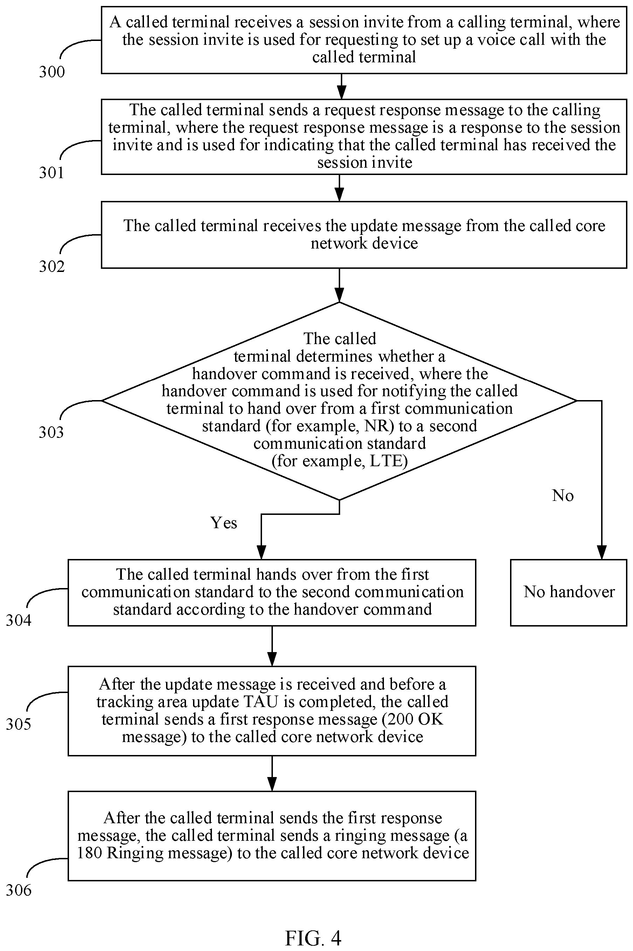

The method for a call connection in the embodiments of this application are described below with reference to FIG. 4 to FIG 9.

Referring to FIG. 4, FIG. 4 is a schematic flowchart for a call connection according to an embodiment of this application. As shown in FIG. 4, the method includes:
Step 300. A called terminal receives a session invite from a calling terminal, where the session invite is used for requesting to set up a voice call with the called terminal.
Step 301. The called terminal sends a request response message to the calling terminal, where the request response message is a response to the session invite and is used for indicating that the called terminal has received the session invite.
   It should be understood that step 300 and step 301 are introduced for simple introduction of a scenario of a call between the called terminal and the calling terminal, and this embodiment of this application is not limited thereto. In fact, the scenario of the call between the called terminal and the calling terminal may include more other messages or signaling, which is not described in detail herein.
Step 302. The called terminal receives an update message from a called core network device.
   For example, the update message is an Update message.
Step 303. In a scenario in which the called terminal falls back from NR to LTE, the called terminal determines whether a handover command is received. The handover command is used for notifying the called terminal to hand over from a first communication standard to a second communication standard.
   If the called terminal receives the handover command, step 304 is performed. If the called terminal has not received the handover command, the communication standard handover is not performed.
Step 304. The called terminal hands over from the first communication standard to the second communication standard according to the handover command.

For example, the first communication standard is a 5G standard; the second communication standard is an LTE standard. The called terminal hands over from the 5G standard to the LTE standard or hands over from the NR standard to the LTE standard according to the handover command.

Alternatively, for example, the handover command is an EPSFB handover command.

Step 305. After the update message is received and before a tracking area update TAU is completed, the called terminal sends a first response message (200 OK message) to the called core network device. The first response message is a response to the update message, the first response message is used for indicating that the called terminal has received the update message, the first response message carries a first parameter (for example, a value of the first parameter is local none), and the first parameter indicates that no voice bearer is set up between the called terminal and the called core network device.

Optionally, in an implementation, step 305 includes: sending, by the called terminal, the first response message after receiving the handover command and handing over from the first communication standard to the second communication standard and before completing the tracking area update TAU.

For example, the called terminal may send the first response message to the calling terminal after receiving the handover command and handing over from the NR standard to the LTE standard and before the TAU update.

Step 306. After the called terminal sends the first response message, the called terminal sends a ringing message (that is, a 180 Ringing message) to the called core network device. The ringing message is used for notifying the calling terminal that the called terminal has started ringing.

Compared with that the called terminal waits for the TAU to be completed and then sends the first response message, in this embodiment of this application, the called terminal does not need to wait for the TAU to be completed before sending the first response message, but sends the first response message after receiving the handover command and before the TAU, so that an interval between the time at which the called terminal sends the first response message and the time at which the called terminal sends the ringing message becomes longer. In this way, although no voice bearer is created between the called terminal and the called core network device when the first response message is sent, because a sending time of the first response message is advanced, the first response message arrives at a calling core network device earlier than the ringing message, thereby avoiding a message disorder problem generated when the ringing message arrives earlier than the first response message. Therefore, the calling core network device can smoothly forward a voice packet on a called side, thereby reducing a probability of voicelessness of a call.

Optionally, after the first response message is sent, the method further includes: performing, by the called terminal, a tracking area update TAU process after sending the first response message; and Set up a voice bearer between the called terminal and the called core network device.

Optionally, the setting up a voice bearer between the called terminal and the called core network device includes: The called terminal sets up, after receiving a voice bearer setup message from the called core network device, a voice bearer with the called terminal according to the voice bearer setup message; and the called terminal sends a voice bearer setup complete message to the called core network device, where the voice bearer setup complete message is used for indicating that a voice bearer is set up between the called terminal and the called core network device.

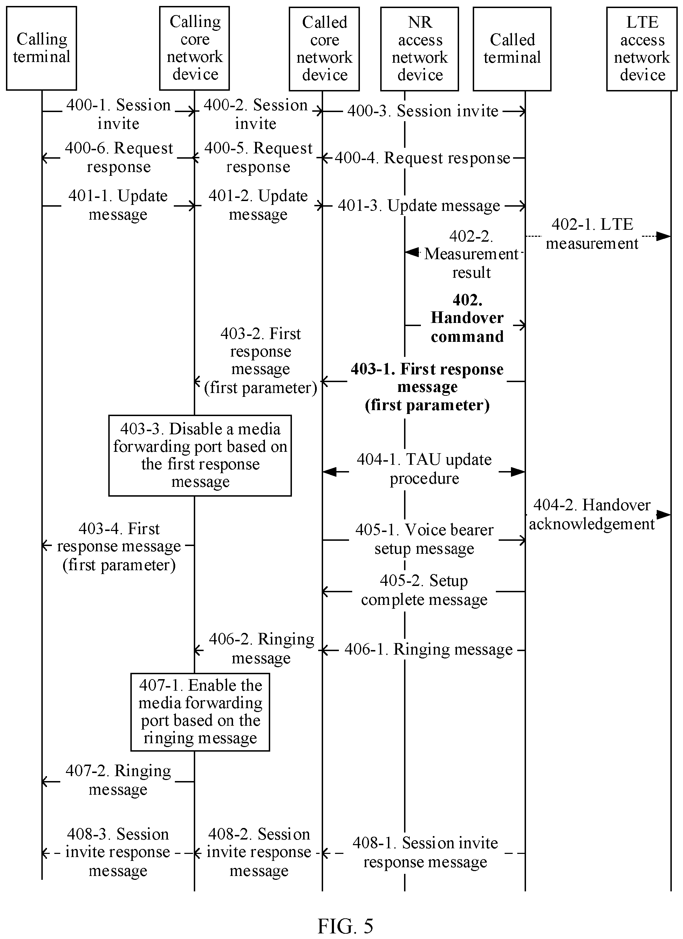

Referring to FIG. 5, FIG. 5 is a schematic procedure interaction diagram of a method for a call connection according to an embodiment of this application. It should be understood that various messages involved in the steps shown in FIG. 5 may be existing messages in the SIP protocol, or may be newly defined messages. This is not specifically limited. As shown in FIG. 5, the method includes:
Step 400-1. A calling terminal sends a session invite to a calling core network device, where the session invite is used for requesting to set up a voice call with a called terminal.
Step 400-2. The calling core network device sends the session invite to a called core network device.
Step 400-3. The called core network device sends the session invite to the called terminal.
Step 400-4. The called terminal sends a request response message to the called core network device, where the request response is a response to the session invite and is used for indicating that the called terminal has received the session invite message.
Step 400-5. The called core network device sends the request response message to the calling core network device.
Step 400-6. The calling core network device sends the request response message to the calling terminal.
Step 401-1. The calling terminal sends an update message to the calling core network device.
Step 401-2. The calling core network device sends the update message to the called core network device.
Step 401-3. The called core network device sends the update message to the called terminal. Correspondingly, the called terminal receives the update message from the called core network device.

For example, in a process in which the calling terminal sets up a connection to the called terminal, when the called terminal is in an NR communication scenario, the update message is sent to the called terminal through the following process: sending, by the calling terminal, an update message to the calling core network device; forwarding, by the calling core network device, the update message to the called core network device; and sending, by the called core network device, the update message to the called terminal through an NR access network device.

For example, the update message is an Update message. The Update message is used for initiating an update request. Generally, the Update message is used for initiating media update.

Step 402. In a scenario in which the called terminal falls back from the NR to the LTE, the NR access network device sends a handover command to the called terminal. Correspondingly, the called terminal receives the handover command from the NR access network device, where the handover command is used for notifying the called terminal to hand over from a first communication standard to a second communication standard. The first communication standard is different from the second communication standard.

For example, the handover command is used for instructing the called terminal to hand over from the NR standard to the LTE standard.

After receiving the handover command, the called terminal hands over from the first communication standard to the second communication standard according to the handover command.

It should be understood that handing over from the NR standard to the LTE standard is merely used as an example for description herein, and this embodiment of this application is not limited thereto.

Before the NR access network device sends the handover command to the called terminal, the NR access network device may instruct the called terminal to perform network measurement. Optionally, before step 402, the method further includes: sending, by the NR access network device, a measurement configuration message to the called terminal; and sending, by the called terminal, a measurement result to the NR access network device.

For example, the measurement configuration message is used for notifying the called terminal to perform LTE measurement. For example, in step 402-1, the called terminal performs measurement on an LTE access network device; and in step 402-2, after the measurement ends, the called terminal may feed back a measurement result (for example, an LTE measurement report) to the NR access network device.

Step 403-1. After the called terminal receives the handover command and before the tracking area update TAU is completed, the called terminal sends a first response message to the called core network device. The first response message carries a first parameter, and the first parameter indicates that no voice bearer is set up between the called terminal and the called core network device.

The first response message is used by the called terminal to acknowledge that the update message has been received. Alternatively, the first response message is used for indicating that the called terminal has received the update message. In addition, the called terminal may carry, in the first response message, a parameter used for representing whether a voice bearer is set up, where the voice bearer refers to a voice bearer between the called terminal and the called core network device.

For example, the first response message is a 200 OK message. A value of the first parameter is local none.

The first response message may finally reach the calling terminal through the called core network device and the calling core network device. For example, during specific implementation, the sending, by the called core network device, the first response message includes: Step 403-2. The called core network device sends the first response message to the calling core network device. Step 403-3. The calling core network device disables a media forwarding port according to the first response message. Step 403-4. The calling core network device sends the first response message to the calling terminal.

After receiving the first response message, the calling core network device may disable the media forwarding port according to the first parameter in the first response message.

Step 404-1. Perform a TAU update procedure between the called terminal and the called core network device.

Step 404-2. After the TAU update is completed, the called terminal sends a handover acknowledgement to the LTE access network device.

Step 405-1. The called core network device sends a voice bearer setup message to the called terminal.

After receiving the voice bearer setup message, the called terminal creates a voice bearer with the called core network device. After a voice bearer is set up between the called terminal and the called core network device, the called terminal sends a voice bearer setup success message to the called core network device.

For example, the voice bearer setup message includes a quality of service class identifier (QoS class identifier, QCI) 1. It may be understood that different values of QCI may correspond to different bearers. When QCI = 1, it represents that a voice service bearer is set up. Alternatively, QCI = 1 corresponds to a voice dedicated bearer.

Step 405-2. The called terminal sends a voice bearer setup complete message to the called core network device. The voice bearer setup complete message indicates that setup of a voice bearer between the called terminal and the called core network device is completed.

Step 406-1. The called terminal sends a ringing message to the called core network device. The ringing message is used for notifying the calling terminal that the called terminal has started ringing.

For example, the ringing message is a 180 Ringing message.

The ringing message may reach the calling terminal through the called core network device and the calling core network device. For example, in step 406-2, the called core network device sends the ringing message to the calling core network device. Step 407-1. The calling core network device enables the media forwarding port according to the ringing message. Step 407-2. The calling core network device sends the ringing message to the calling terminal. After receiving the ringing message, the calling terminal side may learn that the called terminal has started ringing.

For example, the calling core network device sets a call state on the calling side to a ringing state according to the ringing message, and enables the media forwarding port. After the media forwarding port is enabled, the calling core network device may subsequently forward the media data (including the voice packet) on the called side to the calling terminal.

Optionally, after step 407, the method further includes:
Step 408-1. The called terminal sends a session invite response message to the called core network device. The session invite response message is used for responding to the session invite message.
Step 408-2. The called core network device sends the session invite response message to the calling core network device.
Step 408-3. The calling core network device sends the session invite response message to the calling terminal.

The session invite message is used for inviting a user to join a session. The session invite message is sent by the calling terminal, and finally reaches the called terminal through the calling core network device and the called core network device.

For example, the session invite message is an Invite message, and the session invite response message is a 200 OK (Invite) message. The 200 OK (Invite) message is a message sent by the called terminal after the user of the called terminal is answered.

Optionally, after receiving the session invite response message, the calling core network device forwards the voice packet on the called side to the calling side according to the session invite response message, thereby ensuring a normal call between the calling terminal and the called terminal after the call is connected, and reducing a probability of voicelessness of a two-way call.

In this embodiment of this application, after the called terminal receives the update message from the called core network device, the called terminal replies to the called core network device with the first response message without waiting for the TAU to be completed. Compared with that the called terminal sends the first response message after waiting for the TAU to be completed, the called terminal does not need to wait for the TAU to be completed before sending the first response message, so that an interval between the time at which the called terminal sends the first response message and the time at which the called terminal sends the ringing message becomes longer. That is to say, the interval between the time at which the called terminal sends the first response message and the time at which the called terminal sends the ringing message in this embodiment of this application is greater than an interval between the time at which the called terminal sends the first response message and the time at which the called terminal sends the ringing message in the related art. In this way, although no voice bearer is created between the called terminal and the called core network device when the first response message is sent, because a sending time of the first response message is advanced, the first response message arrives at a calling core network device earlier than the ringing message, thereby avoiding a message disorder problem generated when the ringing message arrives earlier than the first response message. Therefore, the calling core network device can smoothly forward a voice packet on a called side, thereby reducing a probability of voicelessness of a call.

The called terminal sends the first response message before the tracking area update is completed. Optionally, after the called terminal sends the first response message, step 404-1 of performing a TAU update procedure between the called terminal and the called core network device includes:
sending a first request message, where the first request message is used for requesting to update a tracking area;
receiving an accept message from the called core network device, where the accept message is used for responding to the first request message; and
sending a tracking area update complete message to the called core network device, where the tracking area update complete message indicates that a tracking area update process is completed.

For example, the first request message is a TAU request, the accept message of the called core network device is a TAU accept message, and the tracking area update complete message is TAU complete.

In other words, through the foregoing related steps of TAU update, after the called terminal sends the first response message, the called terminal may initiate a TAU update procedure to complete a TAU update process.

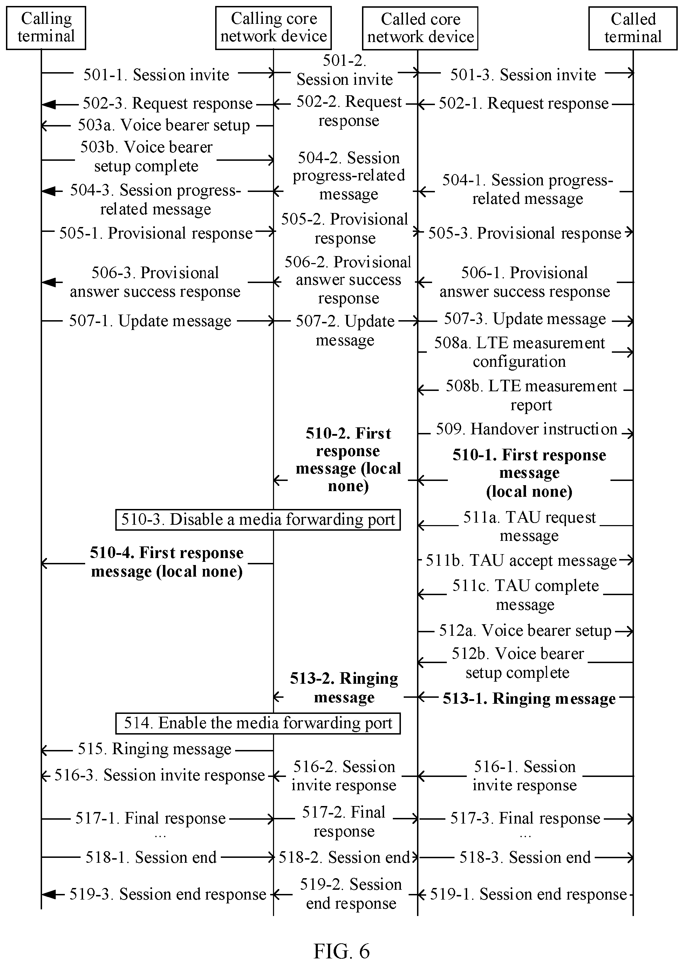

It should be noted that, the method in FIG. 5 shows only part of the steps of setting up a call connection between a calling terminal and a called terminal. This embodiment of this application is not limited thereto. In fact, when the calling terminal sets up the call connection to the called terminal, other steps may be further included. Descriptions are provided in the following with reference to an example in FIG. 6.

FIG. 6 is an exemplary interaction diagram of setting up a call connection between a calling terminal and a called terminal according to an embodiment of this application. It should be understood that messages or signaling involved in FIG. 6 are described by using the messages or the signaling involved in the SIP as an example, and this embodiment of this application is not limited thereto. As shown in FIG. 6, the interaction procedure includes the following steps:

Step 501-1. A calling terminal sends a session invite to a calling core network device. Step 501-2. The calling core network device sends the session invite to a called core network device. Step 501-3. The called core network device sends the session invite to a called terminal.

The session invite is used for initiating a session request. For example, the session invite is used for inviting the called terminal to join a session created by the calling terminal, or is used for requesting to set up a voice call with the called terminal.

For example, the session invite is an Invite message.

Optionally, the session invite includes session description information, and the session description information is used for indicating a media type and a parameter that can be received by the calling terminal.

Step 502-1. The called terminal sends a request response message to the called core network device. Step 502-2. The called core network device forwards the request response message to the calling core network device. Step 502-3. The calling core network device forwards the request response message to the calling terminal.

The request response message is used for indicating that the called terminal has received the session invite message and is processing the session invite message. For example, the request response message is a 100 Trying message.

Step 503a. The calling core network device sends a voice bearer setup message on a calling side to the calling terminal.

Optionally, the voice bearer setup message includes a bearer with QCI = 1. The bearer with QCI = 1 represents a dedicated bearer for setting up a voice service.

For example, the voice bearer setup message on the calling side is an activate dedicated EPS bearer context request (Activate Dedicated EPS Bearer Context Request) message. The activate dedicated EPS bearer context request message is sent by the calling core network device to the calling terminal and is used for requesting to activate a context of a dedicated EPS bearer. The dedicated EPS bearer and the activated EPS bearer context have a same PDN address and APN.

Step 503b. The calling terminal sends a voice bearer setup complete message on the calling side to the calling core network device. The voice bearer setup complete message on the calling side is used for indicating that a voice bearer is set up between the calling terminal and the calling core network device.

For example, the voice bearer setup complete message is an activate dedicated EPS bearer context accept (Activate Dedicated EPS Bearer Context Accept) message. The activate dedicated EPS bearer context accept message is sent by the calling terminal to the calling core network device and is used for acknowledging activation of a dedicated EPS bearer context.

Step 503a and step 503b are used for creating a voice bearer between the calling terminal and the calling core network device.

Step 504-1. The called terminal sends a session progress-related message to the called core network device.

Step 504-2. The called core network device forwards the session progress-related message to the calling core network device.

Step 504-3. The calling core network device forwards the session progress-related message to the calling terminal.

For example, the session progress-related message is a 183 message. The 183 message may be used for setting up an early media service, for example, a user-customized ring-back tone or ring tone.

The calling terminal sends a provisional response message to the called terminal.

Step 505-1. The calling terminal sends a provisional response message to the calling core network device.

Step 505-2. The calling core network device sends the provisional response message to the called core network device.

Step 505-3. The called core network device sends the provisional response message to the called terminal. The provisional response message is used for acknowledging that the session progress-related message in step 504 has been received.

For example, the provisional response message is a provisional response acknowledgement (provisional response acknowledgement, PRACK) message. The PRACK message is used for acknowledging a 183 message during session setup, and perform SDP provision for the second time to negotiate media resources.

The called terminal sends a provisional answer success response message to the calling terminal.

Step 506-1. The called terminal sends a provisional answer success response message to the called core network device.

Step 506-2. The called core network device forwards the provisional answer success response message to the calling core network device.

Step 506-3. The calling core network device forwards the provisional answer success response message to the calling terminal.

The provisional answer success response message is used for indicating that the called terminal has successfully received the provisional response message.

For example, the provisional answer success response message is a 200 OK (PRACK) message.

Step 507-1. The calling terminal sends an update message to the calling core network device.

Step 507-2. The calling core network device forwards the update message to the called core network device.

Step 507-3. The called core network device forwards the update message to the called terminal.

The update message is used for initiating an update request, or used for media update.

For example, the update message is an Update message.

Step 508a. The called core network device sends an LTE measurement configuration to the called terminal.

Optionally, the LTE measurement configuration may be carried in an RRC reconfiguration message (RRCConnectionReconfiguration). The RRC reconfiguration message is used for allocating a radio resource.

Optionally, the RRC reconfiguration message may be sent by the called core network device to the called terminal through the access network device on the called side.

Step 508b. The called terminal sends an LTE measurement report (MeasurementReport) to the called core network device.

For example, the called terminal may report the LTE measurement report to the called core network device through the access network device on the called side.

Step 509. The called core network device sends a handover command to the called terminal.

Optionally, the handover command may be sent to the called terminal by using an RRC release message. The RRC release message is used for instructing the called terminal to release a radio resource.

Alternatively, optionally, the handover command may be sent to the called terminal by using a handover command (MobilityFromNRCommand). The handover command is used for notifying the called terminal to hand over from the NR network to the LTE network.

Step 510. The called terminal sends a first response message to the calling terminal. The first response message corresponds to the first response message in FIG. 5.

Specifically, step 510 includes: 510-1. The called terminal sends a first response message to the called core network device, where the first response message carries local none. 510-2. The called core network device forwards the first response message to the calling core network device. 510-3. The calling core network device disables a media forwarding port based on the local none. 510-4. The calling core network device forwards the first response message to the calling terminal.

For example, the first response message is a 200 OK (Update) message. Because no voice bearer is set up between the called terminal and the called core network device in this case, the 200 OK (Update) message carries the local none. The local none indicates that no voice bearer is set up between the called terminal and the called core network device. After receiving the 200 OK (Update) message, the calling core network device disables the media forwarding port based on the local none.

Step 511a. The called terminal sends a tracking area update (tracking area update, TAU) request message to the called core network device. The TAU request message is used by the called terminal to perform a real tracking area registration update to the network.

For example, the TAU request message is Tracking Area Update Request.

Step 511b. The called core network device sends a TAU accept message to the called terminal. The TAU accept message is used for responding to the TAU request message.

For example, the TAU accept message is Tracking Area Update Accept. The Tracking Area Update Accept is a message sent by the network side to the terminal, and is used for providing data related to EPS mobility management to respond to the tracking area update request message.

Step 511c. The called terminal sends a TAU complete message to the called core network device. The TAU complete message is used for indicating that the tracking area update process is completed.

For example, the TAU complete message is Tracking Area Update Complete. If a GUTI has been changed or a new TMSI is allocated, the called terminal sends the message to the network to respond to the tracking area Update accept message.

Step 512a. The called core network device sends a voice bearer setup message on a called side to the called terminal.

Optionally, the voice bearer setup message includes a bearer with QCI = 1. The bearer with QCI = 1 represents a dedicated bearer for setting up a voice service.

For example, similar to step 503a, the voice bearer setup message on the called side may alternatively be Activate Dedicated EPS Bearer Context Request. For the explanations of the messages, reference may be made to the foregoing descriptions. Details are not described herein again.

Step 512b. The called terminal sends a voice bearer setup complete message on the called side to the called core network device.

For example, similar to step 503b, the voice bearer setup complete message on the called side may alternatively be Activate Dedicated EPS Bearer Context Accept. For the explanations of the messages, reference may be made to the foregoing descriptions. Details are not described herein again.

Step 513-1. The called terminal sends a ringing message to the called core network device. Step 513-2. The called core network device sends the ringing message to the calling core network device.

For example, the ringing message is a 180 Ringing message.

Step 514. After receiving the ringing message, the calling core network device enables the media forwarding port.

Step 515. The calling core network device sends the ringing message to the calling terminal.

Step 516-1. The called terminal sends a session invite response message to the called core network device. Step 516-2. The called core network device sends the session invite response message to the calling core network device. Step 516-3. The calling core network device sends the session invite response message to the calling terminal. For example, the session invite response message is a 200 OK (Invite) message.

Step 517-1. The calling terminal sends a final response message to the calling core network device. Step 517-2. The calling core network device sends the final response message to the called core network device. Step 517-3. The called core network device sends the final response message to the called terminal.

For example, the final response message is an ACK (Invite) message.

Step 518-1. The calling terminal sends a session end message to the calling core network device. Step 518-2. The calling core network device sends the session end message to the called core network device. Step 518-3. The called core network device sends the session end message to the called terminal. The session end message is used for terminating the current session.

For example, the session end message is a BYE message.

Step 519-1. The called terminal sends a session end response message to the called core network device. Step 519-2. The called core network device sends the session end response message to the calling core network device. Step 519-3. The calling core network device sends the session end response message to the calling terminal. The session end response message is used for responding to the foregoing session end message.

For example, the session end response message is an ACK (BYE) message.

In the procedure shown in FIG. 6, the sending time of the 200 OK (Update) message is advanced to the time before the TAU update procedure. Therefore, the 200 OK (Update) message reaches the calling core network device earlier than the 180 Ringing message. In this way, the calling core network device can forward the voice packet, thereby reducing a probability of voicelessness of a call.

It should be noted that, the steps shown in FIG. 6 are only an example of the call connection setup process. This embodiment of this application is not limited thereto.

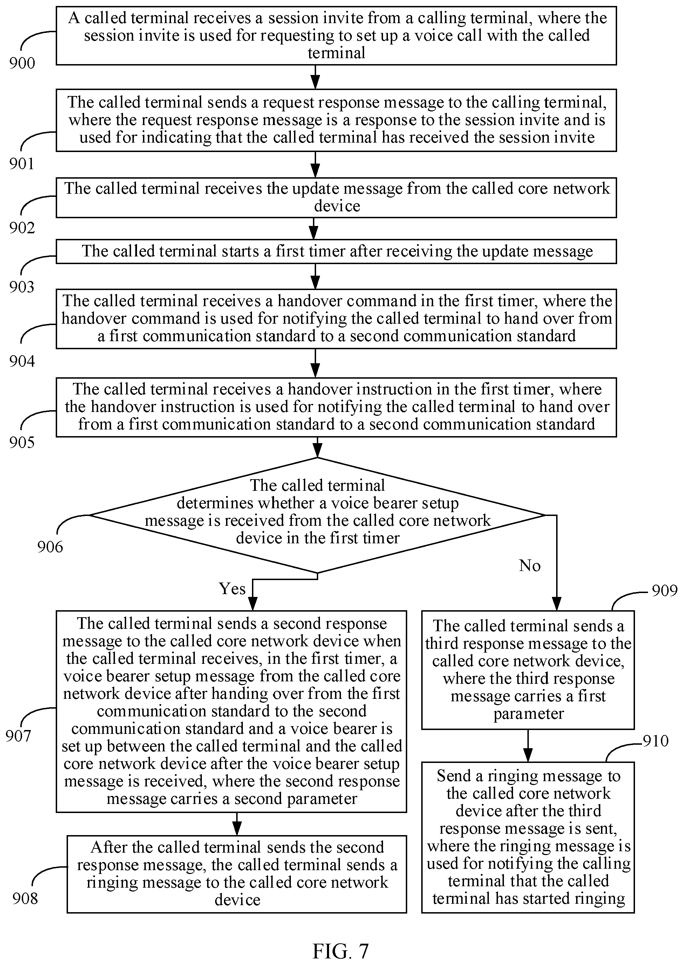

An embodiment of this application further provides another method for a call connection. In the method, a timer is set on a called terminal side. If setup of a voice bearer is completed in the timer, the called terminal may carry a parameter in a sent response message to indicate that the voice bearer has been set up, to avoid a case that a calling core network side does not forward a voice packet. Another method for a call connection according to an embodiment of this application is described below with reference to FIG. 7 to FIG. 9.

Referring to FIG. 7, FIG. 7 is a schematic flowchart for a call connection according to another embodiment of this application. As shown in FIG. 7, the method includes:

Step 900. A called terminal receives a session invite from a calling terminal, where the session invite is used for requesting to set up a voice call with the called terminal.

Step 901. The called terminal sends a request response message to the calling terminal, where the request response message is a response to the session invite and is used for indicating that the called terminal has received the session invite.

It should be understood that step 900 and step 901 are introduced for simple introduction of a scenario of a call between the called terminal and the calling terminal, and this embodiment of this application is not limited thereto. In fact, the scenario of the call between the called terminal and the calling terminal may include more other messages or signaling, which is not described in detail herein.

Step 902. The called terminal receives an update message from a called core network device.

For example, the update message is an Update message.

Step 903. The called terminal starts a first timer after receiving the update message.

Step 904. The called terminal receives a handover command in the first timer, where the handover command is used for notifying the called terminal to hand over from a first communication standard to a second communication standard.

Step 905. The called terminal hands over from the first communication standard to the second communication standard according to the handover command.

Step 906. The called terminal determines whether a voice bearer setup message is received from the called core network device in the first timer.

If a voice bearer setup message is received from the called core network device in the first timer, step 907 and step 908 are performed. If no voice bearer setup message is received from the called core network device in the first timer, step 909 and step 910 are performed.

Optionally, the called terminal sets up, after receiving a voice bearer setup message from the called core network device in the first timer, a voice bearer with the called terminal according to the voice bearer setup message; and the called terminal sends a voice bearer setup complete message to the called core network device, where the voice bearer setup complete message is used for indicating that a voice bearer is set up between the called terminal and the called core network device.

Step 907. The called terminal sends a second response message (a 200 OK message) to the called core network device when the called terminal receives, in the first timer, a voice bearer setup message from the called core network device after handing over from the first communication standard to the second communication standard and a voice bearer is set up between the called terminal and the called core network device after the voice bearer setup message is received, where the second response message is a response to the update message, the second response message is used for indicating that the called terminal has received the update message, the second response message carries a second parameter (for example, a value of the second parameter is local sendrecv), and the second parameter indicates that a voice bearer is set up between the called terminal and the called core network device.

Step 908. The called terminal sends a ringing message to the called core network device after the called terminal sends the second response message, where the ringing message is used for notifying the calling terminal that the called terminal has started ringing.

Step 909. The called terminal sends a third response message (a 200 OK message) to the called core network device if the called terminal has not received the voice bearer setup message from the called core network device when the first timer expires, where the third response message is a response to the update message, the third response message is used for indicating that the called terminal has received the update message, the third response message carries a first parameter (for example, a value of the first parameter is local none), and the first parameter indicates that no voice bearer is set up between the called terminal and the called core network device.

Step 910. Send a ringing message to the called core network device after the third response message is sent, where the ringing message is used for notifying the calling terminal that the called terminal has started ringing.

Optionally, after the third response message is sent to the called core network device and before the ringing message is sent to the called core network device, the method further includes:
receiving the voice bearer setup message from the called core network device; and
sending a voice bearer setup complete message to the called core network device.

That is to say, the called terminal waits for a voice bearer setup message from the called core network device. After setup of a voice bearer between the called terminal and the called core network device is completed, the called terminal sends a ringing message to the called core network device.

In this embodiment of this application, after receiving the update message from the called core network device, the called terminal starts the first timer, and then detects, in the first timer, whether the voice bearer setup message is received from the called core network device. If the voice bearer setup message is received from the called core network device in the first timer, the called terminal sends the second response message (for example, a 200 OK message) to the called core network device, where the second response message carries a second parameter, and the second parameter indicates that a voice bearer is set up between the called terminal and the called core network device. Compared with a case in which the second response message is sent without waiting for the voice bearer to be set up, by setting the timer to wait for the voice bearer to be set up in this embodiment of this application, if the voice bearer is set up during running of the timer, the calling core network device can smoothly forward a voice packet, thereby reducing a probability of voicelessness of a call.

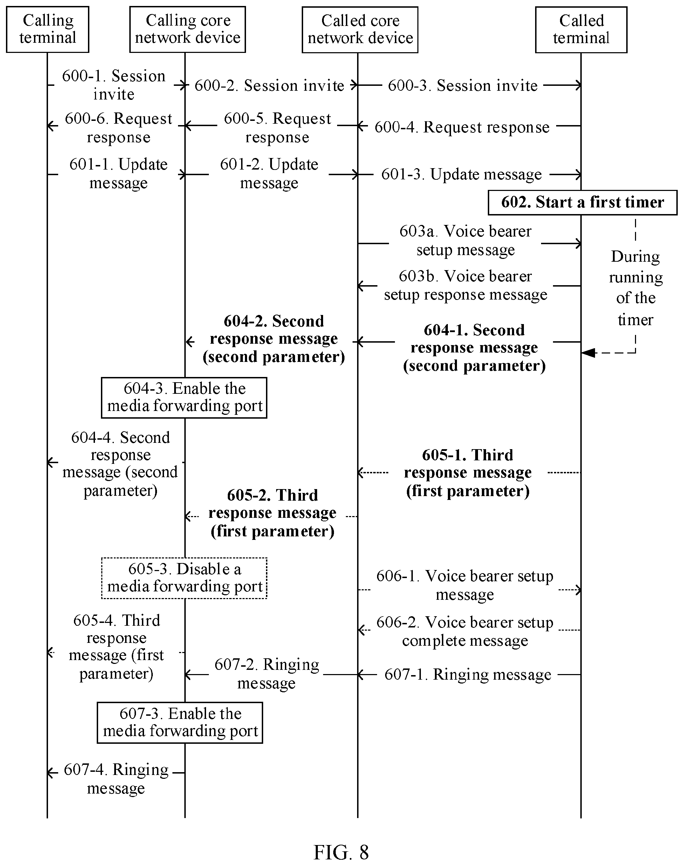

Referring to FIG. 8, FIG. 8 is a schematic procedure interaction diagram of a method for a call connection according to an embodiment of this application. It should be understood that various messages involved in the steps shown in FIG. 8 may be existing messages in the SIP protocol, or may be newly defined messages. This is not specifically limited. It should be further understood that for explanations of some messages involved in FIG. 8, reference may be made to the foregoing explanations in FIG. 5. For brevity, details are not described herein again. As shown in FIG. 8, the method includes:
Step 600-1. A calling terminal sends a session invite to a calling core network device, where the session invite is used for requesting to set up a voice call with a called terminal.
Step 600-2. The calling core network device sends the session invite to a called core network device.
Step 600-3. The called core network device sends the session invite to the called terminal.
Step 600-4. The called terminal sends a request response message to the called core network device, where the request response is a response to the session invite and is used for indicating that the called terminal has received the session invite message.
Step 600-5. The called core network device sends the request response message to the calling core network device.
Step 600-6. The calling core network device sends the request response message to the calling terminal.
Step 601-1. The calling terminal sends an update message to the calling core network device.
Step 601-2. The calling core network device sends the update message to the called core network device.
Step 601-3. The called core network device sends the update message to the called terminal. Correspondingly, the called terminal receives the update message from the called core network device.
Step 602. The called terminal starts a first timer after receiving the update message.

Optionally, a duration of the first timer is greater than a first time threshold and less than a second time threshold, and the second time threshold is related to a timer (for example, a TQos timer) on a called core network side.

A value of the first time threshold is not specifically limited in this embodiment of this application, and may be set based on an actual requirement. For example, the first time threshold may be a time threshold such as 1 second or 2 seconds.

Optionally, an upper limit duration of the first timer is related to a timer of the called core network device. Alternatively, the second time threshold may be determined based on a timer of the called core network device. For example, a duration of the first timer is less than a TQos timer of the called core network device. The TQos timer of the called core network device may be understood as a restricted duration for the called core network device to set up a voice bearer.

For example, if the TQos timer of the called core network device is 6 seconds (corresponding to the second time threshold), the duration of the first timer may be greater than 1 second and less than 6 seconds.

The called terminal may detect, in the first timer, whether the voice bearer setup message is received from the called core network device.

Optionally, in an implementation, the method further includes:
Step 603a. The called terminal receives a voice bearer setup message in the first timer.
Step 603b. The called terminal sends a voice bearer setup complete message to the called core network device in the first timer.

After sending the voice bearer setup complete message to the called core network device, the called terminal performs step 604-1.

Step 604-1. The called terminal sends a second response message to the called core network device in response to that the called terminal has received the voice bearer setup message from the called core network device in the first timer, where the second response message carries a second parameter, and the second parameter indicates that a voice bearer is set up between the called terminal and the core network.

The second response message is used by the called terminal to acknowledge that the update message has been received. Alternatively, the second response message is used for indicating that the called terminal has received the update message. In addition, the called terminal may carry, in the second response message, a parameter (for example, the second parameter) used for representing that a voice bearer is set up.

For example, the second response message is a 200 OK (Update) message. A value of the second parameter is local sendrecv. The local sendrecv indicates that a voice bearer is set up between the called terminal and the called core network device.

The second response message may finally reach the calling terminal through the called core network device and the calling core network device. For example, during specific implementation, the sending, by the called core network device, the second response message includes: Step 604-2. The called core network device sends the second response message to the calling core network device. Step 604-3. The calling core network device enables a media forwarding port according to the second response message. Step 604-4. The calling core network device sends the second response message to the calling terminal.

After receiving the second response message, the calling core network device may enable the media forwarding port according to the second parameter in the second response message.

That is to say, if the creation of the voice bearer is completed in the first timer, the called terminal may send the second response message to the called core network, and carry the second parameter in the second response message, to notify the called core network that the voice bearer has been set up.

It should be noted that, the purpose of introducing the first timer is to prevent the called terminal from waiting indefinitely. If the voice bearer setup message sent by the called core network device has not been received after the first timer expires, the called terminal does not continue to wait, and sends a third response message to the called core network device.

Alternatively, optionally, in another implementation, if the called terminal does not receive the voice bearer setup message in the first timer, the called terminal performs step 605-1, step 606-2, and step 607-1.

Optionally, the method further includes: Step 605-1. The called terminal sends a third response message to the called core network device in response to that the called terminal has not received the voice bearer setup message from the called core network device in the first timer, where the third response message carries a first parameter, and the first parameter indicates that no voice bearer is set up between the called terminal and the called core network device.

Similarly, the third response message is used by the called terminal to acknowledge that the update message has been received. Alternatively, the third response message is used for indicating that the called terminal has received the update message. In addition, the called terminal may carry, in the third response message, a parameter used for representing that no voice bearer is set up.

For example, the third response message is a 200 OK message. A value of the first parameter is local none. The local none indicates that no voice bearer is set up between the called terminal and the called core network device.

The third response message may finally reach the calling terminal through the called core network device and the calling core network device. For example, during specific implementation, the sending, by the called core network device, the third response message includes: Step 605-2. The called core network device sends the third response message to the calling core network device. Step 605-3. The calling core network device disables the media forwarding port according to the third response message. Step 605-4. The calling core network device sends the third response message to the calling terminal.

After receiving the third response message, the calling core network device may disable the media forwarding port according to the first parameter in the third response message.

Step 607-1. The called terminal sends a ringing message to the called core network device. The ringing message is used for notifying the calling terminal that the called terminal has started ringing.

For related descriptions of the ringing message, reference may be made to the descriptions in FIG. 5. Details are not described herein again.

Step 607-2. The called core network device sends the ringing message to the calling core network device.

Step 607-3. The calling core network device enables the media forwarding port according to the ringing message.

Step 607-4. The calling core network device sends the ringing message to the calling terminal.

In the implementation, before step 607-1, the method further includes:
606-1. The called core network device sends a voice bearer setup message to the called terminal.
606-2. The called terminal sends a voice bearer setup complete message to the called core network device.

After setup of a voice bearer between the called terminal and the called core network device is completed, step 607-1 may be performed. That is to say, before sending the ringing message, the called terminal needs to wait for setup of the voice bearer between the called terminal and the called core network device to be completed.

For example, if the called terminal has not received, in the first timer, the voice bearer setup message delivered by the called core network device, the called terminal sends the 200 OK message to the called core network device after the first timer expires. In addition, before sending a 180 Ringing message to the called core network device, the called terminal needs to wait for creation of a voice bearer before sending the 180 Ringing message to the called core network device. In this way, a time interval between the 200 OK message and the 180 Ringing message can be increased, thereby alleviating problems of disorder and voicelessness of a call caused by a short time interval, and improving user experience.

In this embodiment of this application, after receiving the update message from the called core network device, the called terminal starts the first timer, and then detects, in the first timer, whether the voice bearer setup message is received from the called core network device. If the voice bearer setup message is received from the called core network device in the first timer, the called terminal sends the second response message (for example, a 200 OK message) to the called core network device, where the second response message carries a second parameter, and the second parameter indicates that a voice bearer is set up between the called terminal and the called core network device. Compared with a case in which the called terminal sends a 200 OK (carrying local none) message without waiting for the voice bearer to be set up, in this embodiment of this application, after the timer is set to wait for setup of the voice bearer to be completed, the called terminal can send the 200 OK message carrying local sendrecv, so that a quantity of times that the called terminal sends the 200 OK message carrying the local none can be reduced (or understood as that, a probability that the called terminal sends the 200 OK message carrying the local none can be reduced), that is, a case in which a call between the calling and the called is voiceless because the calling core network device disables the media forwarding port when receiving the 200 OK message carrying the local none after receiving the 180 Ringing message can be avoided. In this way, even if there is a short interval between the sending time of the 200 OK message that carries the local sendrecv and that is sent by the called terminal and the sending time of the 180 Ringing message sent by the called terminal, and even if the two messages are received disorderedly on the calling core network device side, the calling core network device does not disable the media forwarding port, so that the calling core network device can smoothly forward the voice packet, thereby reducing a probability of voicelessness of a call.

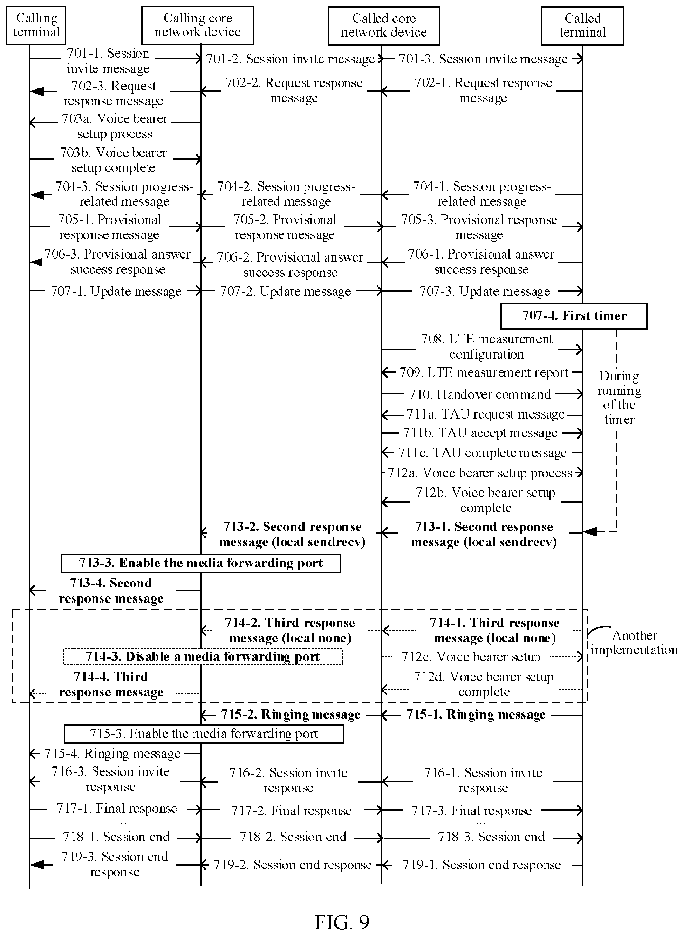

It should be noted that, the method in FIG. 8 shows only part of the steps of setting up a call connection between a calling terminal and a called terminal. This embodiment of this application is not limited thereto. In fact, when the calling terminal sets up the call connection to the called terminal, other steps may be further included. Descriptions are provided in the following with reference to an example in FIG. 9.

FIG. 9 is an exemplary interaction diagram of setting up a call connection between a calling terminal and a called terminal according to an embodiment of this application. It should be understood that messages or signaling involved in FIG. 9 are described by using the messages or the signaling involved in the SIP as an example, and this embodiment of this application is not limited thereto. It should be further understood that some messages involved in FIG. 9 and some messages involved in FIG. 6 have similar functions, and for related explanations, reference may be made to the descriptions in FIG. 6. For brevity, explanations or related descriptions of some messages are omitted when the procedure of FIG. 9 is described.

FIG. 9 differs from FIG. 6 in that: In the procedure of FIG. 9, a called terminal starts a timer after receiving an update message, and then determines, based on whether a voice bearer is set up with a called core network device in the timer, an occasion for sending a 200 OK message. Descriptions are provided in the following with reference to FIG. 9. As shown in FIG. 9, the interaction procedure includes the following steps:

Step 701-1. A calling terminal sends a session invite message to a calling core network device. Step 701-2. The calling core network device sends the session invite message to a called core network device. Step 701-3. The called core network device sends the session invite message to a called terminal.

For explanations or related descriptions of the session invite message, reference may be made to the explanations of step 501. For example, the session invite message is an Invite message.

Step 702-1. The called terminal sends a request response message to the called core network device. Step 702-2. The called core network device forwards the request response message to the calling core network device. Step 702-3. The calling core network device forwards the request response message to the calling terminal.

For example, the request response message is a 100 Trying message.

Step 703a. The calling core network device sends a voice bearer setup message on a calling side to the calling terminal.

For explanations or related descriptions of the voice bearer setup message on the calling side, reference may be made to the explanations of step 503a.

Step 703b. The calling terminal sends a voice bearer setup complete message on the calling side to the calling core network device.

For explanations or related descriptions of the voice bearer setup complete message on the calling side, reference may be made to the explanations of step 503b. Step 703a and step 703b are used for creating a voice bearer between the calling terminal and the calling core network device.

Step 704-1. The called terminal sends a session progress-related message to the called core network device. Step 704-2. The called core network device forwards the session progress-related message to the calling core network device. Step 704-3. The calling core network device forwards the session progress-related message to the calling terminal. For example, the session progress-related message is a 183 message.

Step 705-1. The calling terminal sends a provisional response message to the calling core network device. The provisional response message is used for acknowledging that the session progress-related message in step 704 has been received.

Step 705-2. The calling core network device sends the provisional response message to the called core network device.

Step 705-3. The called core network device sends the provisional response message to the called terminal. For example, the provisional response message is a PRACK message.

Step 706-1. The called terminal sends a provisional answer success response message to the called core network device. For example, the provisional answer success response message is a 200 OK (PRACK) message.

Step 706-2. The called core network device sends a provisional answer success response message to the calling core network device.

Step 706-3. The calling core network device sends a provisional answer success response message to the calling terminal.

Step 707-1. The calling terminal sends an update message to the calling core network device. For example, the update message is an Update message.

Step 707-2. The calling core network device sends the update message to the called core network device.

Step 707-3. The called core network device sends the update message to the called terminal.

Step 707-4. The called terminal simultaneously starts a first timer after receiving the update message.

Optionally, a duration of the first timer is less than a duration of a Qos timer on the called network side.

For example, a duration of the first timer is greater than 1 second and less than 6 seconds.

Step 708. The called core network device sends an LTE measurement configuration to the called terminal.

Optionally, the LTE measurement configuration may be carried in an RRC reconfiguration message (RRCConnectionReconfiguration). The RRC reconfiguration message is used for allocating a radio resource.

Optionally, the RRC reconfiguration message may be sent by the called core network device to the called terminal through the access network device on the called side.

Step 709. The called terminal sends an LTE measurement report (MeasurementReport) to the called core network device.

For example, the called terminal may report the LTE measurement report to the called core network device through the access network device on the called side.

Step 710. The called core network device sends a handover command to the called terminal.

Optionally, the handover command may be sent to the called terminal by using an RRC release message. The RRC release message is used for instructing the called terminal to release a radio resource.

Alternatively, optionally, the handover command may be sent to the called terminal by using a handover command (MobilityFromNRCommand). The handover command is used for notifying the called terminal to hand over from the NR network to the LTE network.

Step 711a. The called terminal sends a TAU request message to the called core network device. The TAU request message is used by the called terminal to perform a real tracking area registration update to the network.

For example, the TAU request message is Tracking Area Update Request.

Step 711b. The called core network device sends a TAU accept message to the called terminal. The TAU accept message is used for responding to the TAU request message.

For example, the TAU accept message is Tracking Area Update Accept. The Tracking Area Update Accept is a message sent by the network side to the terminal, and is used for providing data related to EPS mobility management to respond to the tracking area update request message.

Step 711c. The called terminal sends a TAU complete message to the called core network device. The TAU complete message is used for indicating that the tracking area update process is completed.

For example, the TAU complete message is Tracking Area Update Complete. If a GUTI has been changed or a new TMSI is allocated, the called terminal sends the message to the network to respond to the tracking area Update accept message.

Step 712a. During running of the first timer, the called core network device sends a voice bearer setup message on a called side to the called terminal.

Optionally, the voice bearer setup message includes a bearer with QCI = 1. The bearer with QCI = 1 represents a dedicated bearer for setting up a voice service.

For example, similar to step 703a, the voice bearer setup message on the called side may alternatively be Activate Dedicated EPS Bearer Context Request. For the explanations of the messages, reference may be made to the foregoing descriptions. Details are not described herein again.

Step 712b. During running of the first timer, the called terminal sends a voice bearer setup complete message on the called side to the called core network device.

For example, similar to step 703b, the voice bearer setup complete message on the called side may alternatively be Activate Dedicated EPS Bearer Context Accept. For the explanations of the messages, reference may be made to the foregoing descriptions. Details are not described herein again.

In an implementation, in the running time of the first timer, a voice bearer is set up between the called terminal and the called core network device. For example, step 712a and step 712b occur during running of the first timer, and then step 713 may be performed.

Step 713-1. Assuming that step 712a and step 712b occur during running of the first timer, the called terminal sends a second response message (a 200 OK (Update) message) to the called core network device, where the second response message carries a second parameter (for example, a value of the second parameter is local sendrecv). The second parameter is used for representing that a voice bearer is set up between the called terminal and the called core network device.

Step 713-2. The called core network device forwards the second response message to the calling core network device.

Step 713-3. The calling core network device enables a media forwarding port after receiving the second response message.

Step 713-4. The calling core network device forwards the second response message to the calling terminal.

For example, the second response message is a 200 OK (Update) message. Because a voice bearer is set up between the called terminal and the called core network device in this case, the 200 OK (Update) message carries the local sendrecv. The local sendrecv indicates that a voice bearer is set up between the called terminal and the called core network device. After receiving the 200 OK (Update) message, the calling core network device enables the media forwarding port based on the local sendrecv.

The sending, by the called terminal, a ringing message to the calling core network device through the called core network device specifically includes: Step 715-1. The called terminal sends a ringing message to the called core network device. Step 715-2. The called core network device sends the ringing message to the calling core network device. Step 715-3. After receiving the ringing message, the calling core network device enables the media forwarding port according to the ringing message. Step 715-4. The calling core network device sends the ringing message to the calling terminal. For example, the ringing message is a 180 Ringing message.

The sending, by the called terminal, an invite success response message to the calling terminal specifically includes: Step 716-1. The called terminal sends an invite success response message to the called core network device. Step 716-2. The called core network device sends the invite success response message to the calling core network device. Step 716-3. The calling core network device sends the invite success response message to the calling terminal.

For example, the invite success response message is a 200 OK (Invite) message.

The sending, by the calling terminal, a final response message to the called terminal specifically includes: Step 717-1. The called terminal sends a final response message to the called core network device. Step 717-2. The called core network device sends the final response message to the calling core network device. Step 717-3. The calling core network device sends the final response message to the calling terminal.

For example, the final response message is an ACK (Invite) message.

The sending, by the calling terminal, a session end message to the called terminal specifically includes: Step 718-1. The called terminal sends a session end message to the called core network device. Step 718-2. The called core network device sends the session end message to the calling core network device. Step 718-3. The calling core network device sends the session end message to the calling terminal. The session end message is used for terminating the current session.

For example, the session end message is a BYE message.

The sending, by the called terminal, a session end response message to the calling terminal specifically includes: Step 719-1. The called terminal sends a session end response message to the called core network device. Step 719-2. The called core network device sends the session end response message to the calling core network device. Step 719-3. The calling core network device sends the session end response message to the calling terminal. The session end response message is used for responding to the foregoing session end message.

For example, the session end response message is an ACK (BYE) message.

In the procedure shown in FIG. 9, the first timer is set. If a bearer is set up between the called terminal and the called core network device during running of the first timer, the called terminal may carry the local sendrecv when sending a 200 OK (Update) message, and send a 180 Ringing message after sending the 200 OK (Update) message. Because the 200 OK (Update) message carries the local sendrecv, even if a sending interval between the 200 OK (Update) message and the 180 Ringing message is excessively short, disorder is not caused, so that the calling core network device can smoothly forward the voice packet, thereby reducing a probability of voicelessness of a call.

Alternatively, in another implementation, during running of the first timer, the called terminal has not received a voice bearer setup message from the called core network device. In this case, after the first timer expires, the called terminal may perform step 713-2. In addition, the called terminal needs to wait for a voice bearer to be set up with the called core network device. For example, step 712a and step 712b occur after the running of the first timer expires, and then step 714 may be performed after the setup of the voice bearer is completed.

That is to say, when the voice bearer setup message is not received from the called core network device during the first timer, after step 711c, the following steps (step 714-1, step 712c, and step 712d) are performed instead of the foregoing steps 712a, 712b, and 713-1:
Step 714-1. After the first timer expires, the called terminal sends a third response message (corresponding to the third response message in step 604a) to the called core network device, where the third response message carries a first parameter (for example, a value of the first parameter is local none). The first parameter is used for indicating that no voice bearer is set up between the called terminal and the called core network device.
Step 714-2. The called core network device forwards the third response message to the calling core network device.
Step 714-3. The calling core network device disables the media forwarding port after receiving the third response message.
Step 714-4. The calling core network device forwards the third response message to the calling terminal.

For example, the third response message is a 200 OK (Update) message. Because no voice bearer is set up between the called terminal and the called core network device in this case, the 200 OK (Update) message carries the local none. The local none indicates that no voice bearer is set up between the called terminal and the called core network device. After receiving the 200 OK (Update) message, the calling core network device disables the media forwarding port based on the local none.

Step 712c. The called core network device sends a voice bearer setup message on a called side to the called terminal.

Step 712d. The called terminal sends a voice bearer setup complete message on the called side to the called core network device.

It should be understood that the messages involved in step 712c and step 712d are similar, and are different in occurrence occasions. Step 712c and step 712d occur after the first timer expires. The explanations of the messages involved in step 712c and step 712d are not described herein again.

In the procedure shown in FIG. 9, the first timer is set. If the called terminal has not received the voice bearer setup message during running of the first timer, the called terminal may carry the local none when sending a 200 OK (Update) message, and send a 180 Ringing message after setting up a voice bearer with the called core network device. Because the sending interval between the 200 OK (Update) message and the 180 Ringing message is extended, a probability of disorder of the 200 OK (Update) message and the 180 Ringing message arriving at the calling core network side is reduced, so that the calling core network device can smoothly forward the voice packet, thereby reducing a probability of voicelessness of a call.

It should be noted that, the steps shown in FIG. 9 are only an example of the call connection setup process. This embodiment of this application is not limited thereto.

It should be understood that the examples in FIG. 5 to FIG. 9 are merely for ease of understanding, and are not intended to limit the embodiments of this application to the examples in the figures. In fact, a person skilled in the art may perform equivalent transformations based on the examples in FIG. 5 to FIG. 9 to obtain more implementations.

A voice packet between the calling terminal and the called terminal needs to be forwarded through a core network. Only if the voice packet can be successfully forwarded by the network side, the call between the called terminal and the calling terminal is normal, and there is no problem of voicelessness. To avoid the problem of voicelessness of the call between the calling terminal and the called terminal, this application further provides another embodiment in which the calling core network device determines whether to change the state of the media forwarding port.

Optionally, the calling core network device receives a ringing message (that is, a 180 Ringing message) from the called; and enables the media forwarding port according to the ringing message after receiving the ringing message. The calling core network device receives the response message (for example, the foregoing first response message, where the first response message carries the local none) sent by the called terminal through the called core network device, and the calling core network device does not the media forwarding port according to the local none in the response message.

That is to say, after receiving the ringing message sent by the called terminal through the called core network device, the calling core network device enables the media forwarding port, and does not modify a forwarding state according to the parameter carried in the response message even if the response message is received subsequently, but keeps enabling the media forwarding port, to ensure that the voice packet can be successfully forwarded until the current call ends.

For example, the calling core network device first receives a 180 Ringing message, and enables the media forwarding port according to the 180 Ringing message. Subsequently, the calling core network device receives a 200 OK (Update) message, where the 200 OK (Update) message carries local none. In this case, the calling core network device does not disable the media forwarding port based on the local none, but maintains an enabled state of the media forwarding port, to ensure that the voice packet can be successfully forwarded, thereby reducing a probability that a call between the calling terminal and the called terminal is voiceless.

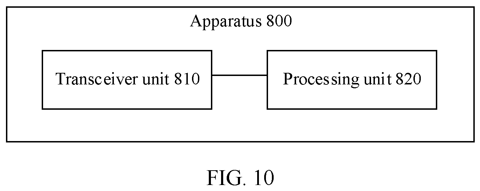

The method for a call connection provided in the embodiments of this application are described above in detail with reference to FIG. 1 to FIG 9. An apparatus embodiment of this application is described in detail below with reference to FIG. 10. It should be understood that, the apparatus for a call connection in this embodiment of this application may perform the method for a call connection in the foregoing embodiments of this application, that is, for specific working processes of the following products, reference may be made to corresponding processes in the foregoing method embodiments.

FIG. 10 is a schematic block diagram of an apparatus 800 for a call connection according to an embodiment of this application. It should be understood that the apparatus 800 may perform the method performed by the called terminal in the method for a call connection shown in FIG. 5 to FIG. 9.

As shown in FIG. 10, the apparatus 800 includes: a transceiver unit 810 and a processing unit 820.

For example, the apparatus 800 is configured to perform the method performed by the called terminal in FIG. 5 and FIG. 6. The following details are included:
The transceiver unit 810 is configured to receive a session invite from a calling terminal, where the session invite is used for requesting to set up a voice call with the called terminal;
the transceiver unit 810 is further configured to send a request response message to the calling terminal, where the request response message is a response to the session invite and is used for indicating that the called terminal has received the session invite;
the transceiver unit 810 is further configured to receive an update message from a called core network device;
the transceiver unit 810 is further configured to receive a handover command from the called core network device, where the handover command is used for notifying the called terminal to hand over from a first communication standard to a second communication standard;
the processing unit 820 is configured to hand over from the first communication standard to the second communication standard according to the handover command;
the transceiver unit 810 is further configured to send a first response message after receiving the update message and before completing a tracking area update TAU, where the first response message is a response to the update message, the first response message is used for indicating that the called terminal has received the update message, the first response message carries a first parameter, and the first parameter indicates that no voice bearer is set up between the called terminal and the called core network device; and
the transceiver unit 810 is further configured to send a ringing message after sending the first response message, where the ringing message is used for notifying the calling terminal that the called terminal has started ringing.

Optionally, in an embodiment, that the transceiver unit 810 is configured to send a first response message after receiving the update message and before completing a tracking area update TAU includes: sending the first response message after receiving the handover command and handing over from the first communication standard to the second communication standard and before completing the tracking area update TAU.

Optionally, in an embodiment, the transceiver unit 810 is further configured to receive, after the sending the first response message and before the sending the ringing message, a voice bearer setup message from the called core network device, where the voice bearer setup message is used for requesting to set up a voice bearer in the second communication standard with the called terminal;
the processing unit 820 is configured to set up a voice bearer with the called terminal according to the voice bearer setup message; and
the transceiver unit 810 is further configured to send a voice bearer setup complete message to the called core network device, where the voice bearer setup complete message is used for indicating that a voice bearer is set up between the called terminal and the called core network device.

Optionally, in an embodiment, the transceiver unit 810 is further configured to send a first request message after the first response message is sent, where the first request message is used for requesting to update a tracking area;
the transceiver unit 810 is further configured to receive a TAU accept message from the called core network device, where the TAU accept message is used for responding to the first request message; and
the transceiver unit 810 is further configured to send a TAU complete message to the called core network device, where the TAU complete message indicates that a tracking area update process is completed.

Optionally, the first response message is a 200 OK message.

Optionally, a value of the first parameter is local none.

Alternatively, for example, the apparatus 800 is configured to perform the method performed by the called terminal in FIG. 8 and FIG. 9. The following details are included:
The transceiver unit 810 is configured to receive a session invite from a calling terminal, where the session invite is used for requesting to set up a voice call with the called terminal;
the transceiver unit 810 is further configured to send a request response message to the calling terminal, where the request response message is a response to the session invite and is used for indicating that the called terminal has received the session invite;
the transceiver unit 810 is further configured to receive an update message from a called core network device;
the processing unit 820 is configured to start a first timer after receiving the update message;
the transceiver unit 810 is further configured to receive a handover command in the first timer, where the handover command is used for notifying the called terminal to hand over from a first communication standard to a second communication standard;
the processing unit 820 is further configured to hand over from the first communication standard to the second communication standard according to the handover command;
the transceiver unit 810 is further configured to send a second response message to the called core network device when the called terminal receives, in the first timer, a voice bearer setup message from the called core network device after handing over from the first communication standard to the second communication standard and a voice bearer is set up between the called terminal and the called core network device after the voice bearer setup message is received, where the second response message is a response to the update message, the second response message is used for indicating that the called terminal has received the update message, the second response message carries a second parameter, and the second parameter indicates that a voice bearer is set up between the called terminal and the core network; and
the transceiver unit 810 is further configured to send a ringing message after sending the second response message, where the ringing message is used for notifying the calling terminal that the called terminal has started ringing.

Optionally, a duration of the first timer is greater than a first time threshold and less than a second time threshold, and the second time threshold is related to a duration of a timer related to setting up a voice bearer on a called core network side.

Optionally, in an embodiment, the transceiver unit 810 is further configured to receive the voice bearer setup message from the called core network device in the first timer; and
the transceiver unit 810 is further configured to send a voice bearer setup complete message to the called core network device in the first timer.

Optionally, in an embodiment, the transceiver unit 810 is further configured to send, by the called terminal, a third response message the core network device in response to that the called terminal has not received the voice bearer setup message from the called core network device in the first timer, where the third response message is a response to the update message, the third response message is used for indicating that the called terminal has received the update message, the third response message carries a first parameter, and the first parameter indicates that no voice bearer is set up between the called terminal and the called core network device; and
the transceiver unit 810 is further configured to send a ringing message to the called core network device after the third response message is sent, where the ringing message is used for notifying the calling terminal that the called terminal has started ringing.

Optionally, in an embodiment, the transceiver unit 810 is further configured to receive the voice bearer setup message from the called core network device after the third response message is sent to the called core network device and before the ringing message is sent to the called core network device; and send a voice bearer setup complete message to the called core network device.

Optionally, in an embodiment, a value of the first parameter is local none.

Optionally, in an embodiment, a value of the second parameter is local sendrecv.

Optionally, in an embodiment, the first communication standard is a 5G standard; the second communication standard is an LTE standard; or
the handover command is an EPSFB handover command.

In a possible example, the transceiver unit 810 may be implemented by a transceiver. The processing unit 820 may be implemented by using a processor or a processing unit. It should be understood that the apparatus 800 is represented in a form of a functional unit. The term "unit" may be realized in a form of software and/or hardware, which is not specifically limited in the embodiments of this application.

For example, the "unit" may be a software program, a hardware circuit or a combination of the software program the hardware circuit for realizing the above functions. The hardware circuit may include an application specific integrated circuit (application specific integrated circuit, ASIC), an electronic circuit, a processor (for example, a shared processor, a dedicated processor, or a packet processor) for executing one or more software or firmware programs, a memory, an integrated logic circuit, and/or another appropriate device that can provide the foregoing function.

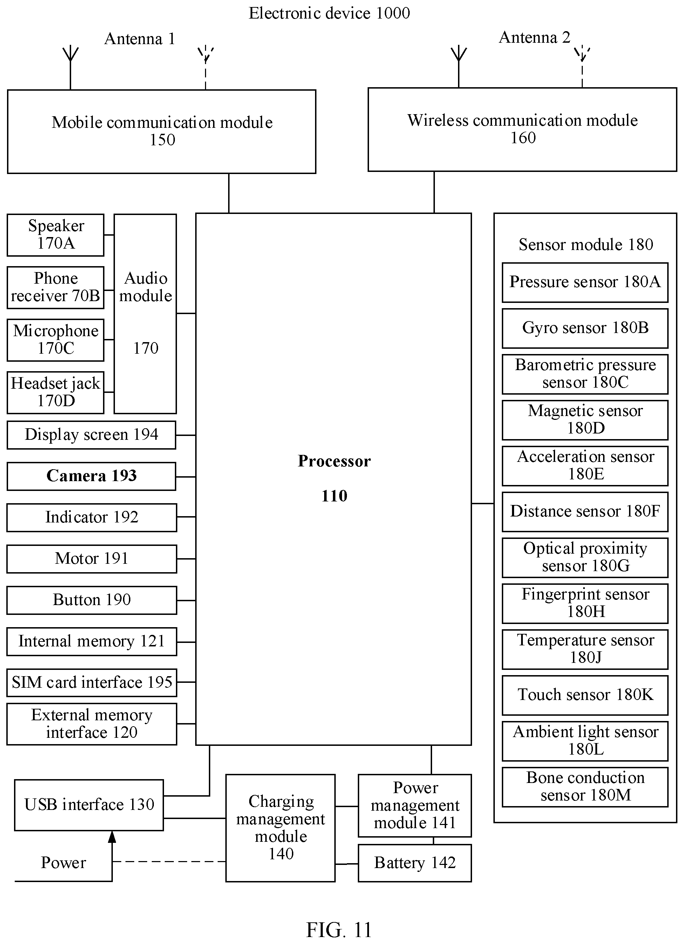

FIG. 11 is a structural schematic diagram of an electronic device 1000 applicable to this application.

The electronic device 1000 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, and an audio module 170, a speaker 170A, a phone receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It should be noted that, the structure shown in FIG. 11 does not constitute a specific limitation on the electronic device 1000. In some other embodiments of this application, the electronic device 1000 may include more or less components than those shown in FIG. 11, or the electronic device 1000 may include a combination of some of the components shown in FIG. 11, or the electronic device 1000 may include subcomponents of some of the components shown in FIG. 11. The components shown in FIG. 11 may be implemented by hardware, software, or a combination of software and hardware.

the processor 110 may include one or more processing units. For example, the processor 110 may include at least one of the following processing units: an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and a neural-network processing unit (neural-network processing unit, NPU). Different processing units may be independent devices, or may be integrated devices.

The controller may generate an operation control signal according to an instruction operation code and a timing signal, and read an instruction and control execution of the instruction.

The processor 110 may further be configured with a memory configured to store an instruction and data. In some embodiments, the memory in the processor 110 is a cache memory. The memory may store an instruction or data that is just used or used cyclically by the processor 110. If the processor 110 needs to use the instruction or the data again, the processor 110 may directly invoke the instruction or the data from the memory, repeated access is avoided, and waiting time of the processor 110 is reduced, thereby improving system efficiency.

In some embodiments, the processor 110 may include one or more interfaces. For example, the processor 110 may include at least one of the following interfaces: an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO), a SIM interface, and a USB interface.

In some embodiments, the processor 110 is configured to invoke a communication module to receive a session invite from a calling terminal, where the session invite is used for requesting to set up a voice call with a called terminal; send a request response message to the calling terminal, where the request response is a response to the session invite and is used for indicating that the called terminal has received the session invite message; receive an update message from a called core network device; receive a handover command, where the handover command is used for notifying the called terminal to hand over from a first communication standard to a second communication standard; hand over from the first communication standard to the second communication standard according to the handover command; send a first response message after receiving the update message and before completing a tracking area update TAU, where the first response message is a response to the update message, the first response message is used for indicating that the called terminal has received the update message, the first response message carries a first parameter, and the first parameter indicates that no voice bearer is set up between the called terminal and the called core network device; and send a ringing message after sending the first response message, where the ringing message is used for notifying the calling terminal that the called terminal has started ringing.

In some other embodiments, the processor 110 is configured to invoke a communication module to receive a session invite from a calling terminal, where the session invite is used for requesting to set up a voice call with the called terminal; send a request response message to the calling terminal, where the request response message is a response to the session invite and is used for indicating that the called terminal has received the session invite; receive an update message from a called core network device; start a first timer after receiving the update message; receive, by the called terminal, a handover command in the first timer, where the handover command is used for notifying the called terminal to hand over from a first communication standard to a second communication standard; hand over from the first communication standard to the second communication standard according to the handover command; send, by the called terminal, a second response message to the called core network device when the called terminal receives, in the first timer, a voice bearer setup message from the called core network device after handing over from the first communication standard to the second communication standard and a voice bearer is set up between the called terminal and the called core network device after the voice bearer setup message is received, where the second response message is a response to the update message, the second response message is used for indicating that the called terminal has received the update message, the second response message carries a second parameter, the second parameter indicates that a voice bearer is set up between the called terminal and the called core network device, and the voice bearer setup message is used for requesting to set up a voice bearer in the second communication standard with the called terminal; and send a ringing message after the called terminal sends the second response message, where the ringing message is used for notifying the calling terminal that the called terminal has started ringing.

A connection relationship among modules shown in FIG. 11 is only schematically explained, which does not constitute limitations on the connection relationship among the modules of the electronic device 1000. Optionally, the modules of the electronic device 1000 may adopt a combination of a plurality of connection modes in the above embodiment.

A wireless communications function of the electronic device 1000 may be implemented by using the antenna 1, the antenna 2, the mobile communications module 150, the wireless communications module 160, the modem processor, the baseband processor, and other components.

The electronic device 1000 can implement a display function by using the GPU, the display screen 194, and the application processor. The GPU is a microprocessor for image processing, and is connected to the display screen 194 and the application processor. The GPU is configured to perform mathematical and geometric calculation, and is configured to render an image. The processor 110 may include one or more GPUs that execute a program instruction to generate or change display information.

The display screen 194 may be configured to display an image or a video. The display screen 194 may include a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini light-emitting diode (mini light-emitting diode, Mini LED), a micro light-emitting diode (micro light-emitting diode, Micro LED), a micro OLED (Micro OLED), or a quantum dot light emitting diode (quantum dot light emitting diodes, QLED). In some embodiments, the electronic device 1000 may include one or N display screens 194, and N is a positive integer greater than 1.

The electronic device 1000 can implement a photographing function by using the ISP, the camera 193, the video codec, the GPU, the display screen 194, the application processor, and the like.

The digital signal processor is configured to process a digital signal, and may further process another digital signal in addition to a digital image signal. For example, when the electronic device 1000 performs frequency selection, the digital signal processor is configured to perform Fourier transform and the like on frequency energy.

The electronic device 1000 may implement an audio function, for example, music playback or recording, by using the audio module 170, the speaker 170A, the phone receiver 170B, the microphone 170C, the headset jack 170D, the application processor, and the like.

It may be understood that the method for a call connection in the embodiments of this application may be applied to the electronic device shown in FIG. 11. For specific implementation steps, reference may be made to the descriptions of the foregoing method embodiments. Details are not described herein again.

According to the method provided in the embodiments of this application, this application further provides a communication system, including the foregoing called terminal, calling terminal, called core network device, and calling core network device. Optionally, the communication system may further include a calling access network device and a called access network device.

An embodiment of this application provides a chip system. The chip system includes one or more processors, configured to invoke, from a memory, instructions stored in the memory and run the instructions, to cause the foregoing method in the embodiments of this application to be performed. The chip system may include a chip, or may include a chip and another discrete device.

The chip system may include an input circuit or interface configured to send information or data and an output circuit or interface configured to receive information or data.

This application further provides a computer program product, where the computer program product, when executed by a processor, implements the method according to any method embodiment of this application.

The computer program product may be stored in a memory, and subjected to processing procedures such as preprocessing, compiling, assembling, and linking, to be eventually converted into an executable target file that can be executed by the processor.

This application further provides a computer-readable storage medium, storing a computer program, where the computer program, when executed by a computer, implements the method according to any method embodiment of this application. The computer program may be a high-level language program or an executable object program.

The computer-readable storage medium may be a volatile memory or non-volatile memory, or may include both a volatile memory and a non-volatile memory. The non-volatile memory may be a read-only memory (read-only memory, ROM), a programmable ROM (programmable ROM, PROM), an erasable PROM (erasable PROM, EPROM), an electrically EPROM (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It may be clearly understood by a person skilled in the art that, for ease and brief description, for a detailed working process and a generated technical effect of the foregoing apparatus and device, reference may be made to a corresponding process and technical effect in the foregoing method embodiment, and details are not described herein again
In the several embodiments provided in this application, it is to be understood that the disclosed system, apparatus, and method may be implemented in other manners. For example, some features of the method embodiment described above may be ignored or not be performed. The described apparatus embodiment is merely exemplary. The unit division is merely logical function division and may be other division during actual implementation, and a plurality of units or components may be combined or integrated into another system. In addition, the coupling between the units or the coupling between the components may be direct coupling or indirect coupling, and the coupling includes an electrical connection, a mechanical connection, or another form of connection.

It should be understood that in various embodiments of this application, an order of sequence numbers of the foregoing processes does not indicate an execution sequence, and execution sequences of the processes should be determined according to functions and internal logics thereof and should not impose any limitation on an implementation process of the embodiments of this application.

In addition, the terms "system" and "network" in this specification may be used interchangeably in this specification. The term "and/or" used herein describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The terms (or numbers) such as "first" and "second" occurring in the embodiments of this application are used merely for the purpose of description, namely, merely used to distinguish between different objects such as different "response messages", and shall not be construed as indicating or implying relative importance or implying a quantity of indicated technical features. Therefore, a feature defined by "first", "second", or the like can explicitly or implicitly includes one or more features. In the descriptions of the embodiments of this application, "at least one" refers to one or more. "Multiple" means two or more. "At least one of the following items" or a similar expression thereof refers to any combination of these items, including one item or any combination of a plurality of items.

In conclusion, what are described above are merely examples of embodiments of the technical solutions of this application, but is not intended to limit the protection scope of this application. Any modification, equivalent replacement, or improvement made within the spirit and principle of this application shall fall within the protection scope of this application.

## Claims

1. A method for a call connection, wherein the method is applied to a called terminal, and the method comprises:
receiving a session invite from a calling terminal, wherein the session invite is used for requesting to set up a voice call with the called terminal;
sending a request response message to the calling terminal, wherein the request response message is a response to the session invite and is used for indicating that the called terminal has received the session invite;
receiving an update message from a called core network device;
receiving a handover command, wherein the handover command is used for notifying the called terminal to hand over from a first communication standard to a second communication standard;
handing over from the first communication standard to the second communication standard according to the handover command;
sending a first response message after receiving the update message and before completing a tracking area update TAU, wherein the first response message is a response to the update message, the first response message is used for indicating that the called terminal has received the update message, the first response message carries a first parameter, and the first parameter indicates that no voice bearer is set up between the called terminal and the called core network device; and
sending a ringing message after the called terminal sends the first response message, wherein the ringing message is used for notifying the calling terminal that the called terminal has started ringing.

2. The method according to claim 1, wherein the sending a first response message after receiving the update message and before completing a tracking area update TAU comprises:
sending, by the called terminal, the first response message after receiving the handover command and handing over from the first communication standard to the second communication standard and before completing the tracking area update TAU.

3. The method according to claim 1 or 2, wherein after the called terminal sends the first response message and before the ringing message is sent, the method further comprises:
receiving a voice bearer setup message from the called core network device, wherein the voice bearer setup message is used for requesting to set up a voice bearer in the second communication standard with the called terminal;
setting up a voice bearer with the called terminal according to the voice bearer setup message; and
sending a voice bearer setup complete message to the called core network device, wherein the voice bearer setup complete message is used for indicating that a voice bearer is set up between the called terminal and the called core network device.

4. The method according to any one of claims 1 to 3, wherein after the first response message is sent, the method further comprises:
sending a first request message, wherein the first request message is used for requesting to update a tracking area;
receiving a TAU accept message from the called core network device, wherein the TAU accept message is used for responding to the first request message; and
sending a TAU complete message to the called core network device, wherein the TAU complete message indicates that a tracking area update process is completed.

5. The method according to any one of claims 1 to 4, wherein the first response message is a 200 OK message.

6. The method according to any one of claims 1 to 5, wherein a value of the first parameter is local none.

7. A call method, wherein the method is applied to a called terminal, and the method comprises:
receiving a session invite from a calling terminal, wherein the session invite is used for requesting to set up a voice call with the called terminal;
sending a request response message to the calling terminal, wherein the request response is a response to the session invite and is used for indicating that the called terminal has received the session invite message;
receiving an update message from a called core network device;
starting a first timer after receiving the update message;
receiving, by the called terminal, a handover command in the first timer, wherein the handover command is used for notifying the called terminal to hand over from a first communication standard to a second communication standard;
handing over, by the called terminal, from the first communication standard to the second communication standard according to the handover command;
sending, by the called terminal, a second response message to the called core network device when the called terminal receives, in the first timer, a voice bearer setup message from the called core network device after handing over from the first communication standard to the second communication standard and a voice bearer is set up between the called terminal and the called core network device after the voice bearer setup message is received, wherein the second response message is a response to the update message, the second response message is used for indicating that the called terminal has received the update message, the second response message carries a second parameter, the second parameter indicates that a voice bearer is set up between the called terminal and the called core network device, and the voice bearer setup message is used for requesting to set up a voice bearer in the second communication standard with the called terminal; and
sending a ringing message after the called terminal sends the second response message, wherein the ringing message is used for notifying the calling terminal that the called terminal has started ringing.

8. The method according to claim 7, wherein a duration of the first timer is less than a second time threshold, and the second time threshold is related to a duration of a timer related to setting up a voice bearer on a called core network side.

9. The method according to claim 7 or 8, wherein in the first timer, the method further comprises:
receiving the voice bearer setup message from the called core network device; and
sending a voice bearer setup complete message to the called core network device.

10. The method according to claim 7 or 8, wherein the method further comprises:
sending, by the called terminal, a third response message to the called core network device in response to that the called terminal has not received the voice bearer setup message from the called core network device in the first timer, wherein the third response message is a response to the update message, the third response message is used for indicating that the called terminal has received the update message, the third response message carries a first parameter, and the first parameter indicates that no voice bearer is set up between the called terminal and the called core network device; and
sending a ringing message to the called core network device after the third response message is sent, wherein the ringing message is used for notifying the calling terminal that the called terminal has started ringing.

11. The method according to claim 10, wherein after the third response message is sent to the called core network device and before the ringing message is sent to the called core network device, the method further comprises:
receiving the voice bearer setup message from the called core network device; and
sending a voice bearer setup complete message to the called core network device.

12. The method according to claim 10 or 11, wherein a value of the first parameter is local none.

13. The method according to any one of claims 7 to 11, wherein a value of the second parameter is local sendrecv.

14. The method according to any one of claims 1 to 13, wherein the method further comprises at least one of the following:
the first communication standard is a 5G standard;
the second communication standard is an LTE standard; or
the handover command is an EPSFB handover command.

15. An electronic device, comprising a processor and a memory, wherein the processor is coupled to the memory, the memory is configured to store a computer program, and the computer program, when executed by the processor, causes the electronic device to perform the method according to any one of claims 1 to 14.

16. A chip, comprising a processor, wherein when the processor executes an instruction, the processor performs the method according to any one of claims 1 to 14.
